(19) Europäisches Patentamt
European Patent Office
Office européen des brevets

(11) EP 2 014 344 A2

(12) EUROPEAN PATENT APPLICATION

(43) Date of publication:
14.01.2009 Bulletin 2009/03

(51) Int Cl.:
B01D 11/02 (2006.01)

(21) Application number: 08164000.5

(22) Date of filing: 19.11.2004

(84) Designated Contracting States:
AT BE BG CH CY CZ DE DK EE ES FI FR GB GR HU IE IS IT LI LU MC NL PL PT RO SE SI SK TR
Designated Extension States:
AL HR LT LV MK YU

(30) Priority: 19.11.2003 DK 200301718

(62) Document number(s) of the earlier application(s) in accordance with Art. 76 EPC:
04797466.2 / 1 701 775

(71) Applicant: SCF Technologies A/S
2730 Herlev (DK)

(72) Inventors:
• Iversen, Steen Brummerstedt
2950 Vedbæk (DK)

• Felsvang, Karsten
3450 Allerød (DK)
• Lüthje, Viggo
2880 Bagsværd (DK)
• Larsen, Tommy
4200 Slagelse (DK)
• Henriksen, Ole
9000 Aalborg (DK)

(74) Representative: Plougmann & Vingtoft A/S
Sundkrogsgade 9
P.O. Box 831
2100 Copenhagen Ø (DK)

Remarks:
This application was filed on 09.09.2008 as a divisional application to the application mentioned under INID code 62.

(54) **A method and process for controlling the temperature-, pressure- and density profiles in dense fluid processes**

(57) The present invention relates to a method of treating a material contained in a vessel. This method involves a fluid present in the vessel and comprises at least one pressurisation step in which the pressure in the vessel is increased and at least one depressurisation step in which the pressure in the vessel is decreased. The invention further relates to an apparatus for executing this method and the products obtained by this method.

Fig. 1

0: Material handling and purging, 1: Pressurization, 2: Holding Period for Treatment, 3: Depressurization.

**Description**

The present invention relates to a method and apparatus for controlling the temperature-, pressure- and density profiles within a vessel operating under high pressure conditions, in particular with a dense fluid under supercritical conditions. More in particular the invention relates to measures and procedures, and an apparatus for controlling the temperature-, pressure- and density profile within pressure vessels for dense fluid treatment processes in order to improve the efficiency of such processes.

BACKGROUND

Fluids under high pressure, and in particular under supercritical conditions have attractive properties for many applications. The diffusivity, viscosity and surface tension are gas-like, while properties such as density and solubility are liquid-like. Furthermore, the solubility is tuneable by simple means such as temperature and pressure.

These attractive properties of such dense fluids at sub- or supercritical conditions have attracted increasing interest, and many applications are under development in research laboratories all over the world. Examples of applications include impregnation (coating), extraction, reactions, synthesis of particles in the micrometer and nanometer range, synthesis of new advanced materials etc.

The solubility in a dense fluid is a function of the fluid density, and the operating window for most applications is typically selected from solubility considerations. The density of a dense fluid is a unique function of the temperature and pressure. Further, many applications involve processing of thermosensitive compounds or materials, where temperature or pressure gradients affects the mechanical integrity of the end product or lead to unacceptable large variations in the quality. This is particularly true for applications involving high pressure treatment of a porous media e.g. an impregnation (coating) or an extraction process.

Such applications generally involves a pressurisation step, a step at a substantially constant pressure and a depressurisation step. If e.g. the operating pressure is approximately 150 bar, an adiabatic temperature increase of approximately 40 C will occur during pressurisation if the free volume in vessel is 75 % and even more if the free volume is higher. Likewise, a similar temperature decrease occurs during depressurization. If the free volumes not occupied by the material to being treated is present within the vessel, considerable higher temperatures may be present locally. Such uncontrolled temperature increases are undesirable in most applications as the temperature has a significant impact on the fluid density and pressure. For example, in a process utilizing supercritical $CO_2$ operating at 145 bar and 45 °C, a temperature drop of only 6 °C will result in a pressure decrease of 20 bar in order to maintain a constant density. In practise, the temperature drop will be compensated by a change in density and not in pressure. As the solubility properties of a dense fluid is related to the density, temperature effects have a very strong influence on the performance of dense fluid processes and need to be controlled accurately.

Most dense fluid applications are still only performed in laboratory to pilot scale in small diameter vessels in the milliliter to liter scale. In such dense fluid applications, temperature control is generally performed by using a jacketed (double walled) vessel with a thermostated cooling or heating fluid to remove or add heat from the process, and a control of the inlet fluid temperature.

However, when scaling up such processes to large scale industrial vessels, it has been found that the heat transfer area of the vessel is not large enough to ensure sufficient heat transfer through the vessel walls. It has further been found that significant temperature- and density gradients may exist within the vessel, which lead to less efficient processes and may result in unacceptable high variations of the quality of the final product.

DESCRIPTION OF THE INVENTION

An objective of the present invention is to provide a method for improved control of temperature-, pressure- and density profiles within a pressure vessel for dense fluid treatment processes in order to improve the efficiency of such processes. Another objective of the present invention is to provide a method for improving the mixing of the fluid within the vessel. Further objectives includes providing method(s) for reducing energy consumption, and equipment size of such processes.

Furthermore, it is an objective of the present invention to provide an apparatus for use in treating a material by the method mentioned above. Additionally, it is an objective to provide a product obtained by the above mentioned method.

These objectives and the advantages that will be evident from the following description is obtained by the following preferred embodiments of the invention.

In one embodiment of the method may involve a fluid present in the vessel and comprising at least one pressurisation step in which the pressure in the vessel may be increased and at least one depressurisation step in which the pressure in the vessel may be decreased.

In another embodiment the method may further comprise recirculating in at least part time of the method at least a part of the fluid, the re-circulating comprising: withdrawing from the vessel at least a part of the fluid contained within the vessel and feeding it to a re-circulation loop and subsequently feeding the fluid to the vessel.

Furthermore, the method according to the invention may further comprise a holding step in which the pressure in the vessel may substantially be constant and/or in which the pressure of the fluid in the vessel may be varied according to a pre-selected schedule during a holding period of predetermined length, the fluid may preferably be at supercritical conditions during the holding period.

Additionally, the method according may further comprise the step of controlling the temperature of the fluid in the recirculation loop according to the present invention.

In another preferred embodiment the heat may be added to and/or extracted from the fluid in the recirculation loop.

Advantageously, the method may control temperature-, pressure- and/or density profiles within the vessel according to invention.

Furthermore, the fluid after the pressurisation step may be in a supercritical state according to a preferred embodiment of the present invention.

In a preferred embodiment the fluid may be selected from the group consisting of carbon dioxide, alcohol, water, ethane, ethylene, propane, butane, sulfurhexafluoride, nitrousoxide, chlorotrifluoromethane, monofluoromethane, methanol, ethanol, DMSO, isopropanol, acetone, THF, acetic acid, ethyleneglycol, polyethyleneglycol, N,N-dimethylaniline etc. and mixtures thereof.

In another preferred embodiment the fluid may furthermore be selected from the group consisting of methane, pentane, hexane, cyclohexane, toluene, heptane, benzene, ammonia, propanol etc. and mixtures thereof.

Additionally, the fluid according to the invention may be carbon dioxide.

The fluid may furthermore comprise at least one cosolvent according to a preferred embodiment of the present invention.

Advantageously, the cosolvent may according to a preferred embodiment of the invention be selected from the group consisting of alcohol(s), water, ethane, ethylene, propane, butane, sulfurhexafluoride, nitrousoxide, chlorotrifluoromethane, monofluoromethane, methanol, ethanol, DMSO, isopropanol, acetone, THF, acetic acid, ethyleneglycol, polyethyleneglycol, N,N-dimethylaniline etc. and mixtures thereoff.

Furthermore, the cosolvent may according to a preferred embodiment of the invention be selected from the group consisting of methane, pentane, hexane, heptane, ammonia, benzene, etc. and mixtures thereof.

The fluid may in another preferred embodiment further comprise one or more surfactants, said surfactants being preferably selected from the group consisting of hydrocarbons and fluorocarbons preferably having a hydrophilic/lipophilic balance value of less than 15, where the HLB value is determined according to the following formula: HLB = 7 + sum(hydrophilic group numbers)-sum(lipophilic group numbers).

Advantageously, the fluid after the depressurisation step may be in a gas and/or liquid and/or solid state according to invention.

In yet another preferred embodiments the fluid present in the re-circulation loop may have substantially the same thermodynamical properties as the fluid within the vessel, such as the fluid does not undergo a phase change to a liquid or solid state

Furthermore, the re-circulation according to the invention may be performed during the pressurisation step and/or during the depressurisation step and/or, when appendant on claims 3-14, during the holding step.

In another embodiment part of the fluid in the pressure vessel may be withdrawn to the re-circulation loop from/to a pressure in the pressure vessel below 70 bar, such as from/to a pressure below 60 bars, preferably from/to a pressure below 40 bars, and advantageously from/to a pressure below 2 bar.

Furthermore, in preferred embodiment of the present invention the fluid volume withdrawn from the vessel may correspond to the exchange of at least one vessel volume per hour, such as at least two vessel volume exchanges per hour, preferably at least 5 vessel volume exchanges per hour, and advantageously at least 10 vessel volume exchanges per hour, and preferably in the range of 10 to 20 vessel volume exchanges per hour.

Advantageously, the pressure in the vessel after pressurisation step may be in the range 85-500 bar, preferably in the range 85-300 bar such as 100-200 bar according to the invention.

In another preferred embodiment the temperature in the vessel may be maintained in the range 20-300 °C, such as a 30-150 °C, preferable as 35-100 °C, such as 40-60 C

Additionally, the rate of (de)pressurisation is controlled in a predefined manner in specific pressure intervals during the (de)pressurisation period according to the present invention.

In an additional embodiment of the present invention the rate of pressure increase in at least part of the pressure range from 40 to 120 bars may at the most be one half of the maximum rate of pressurisation outside this range, such as one third of the maximum rate of pressurisation, and preferably at the most one fifth of the maximum rate of pressurisation, and more preferably at the most one tenth of maximum rate of pressurisation outside this pressure range.

In another preferred embodiment the rate of depressurisation rate in at least part of the pressure interval below 110 bars may at the most be one half of the maximum rate of depressurisation outside this range, such as one third of the maximum rate of depressurisation, and preferably at the most one fifth of the maximum rate of depressurisation, and more preferably at the most one tenth of maximum rate of depressurisation outside this pressure range.

When controlling the rate of the (de)pressurisation in the predefined manner the processed material, such as whole cork stoppers, wood and the like thermosensitive material, is not destroyed or damaged.

Furthermore, the temperature of the fluid being fed into vessel during depressurisation may be increased by up to 10 °C, such as up to 25 °C compared to the inlet temperature during the holding period according to the invention.

Advantageously, the temperature of the fluid being fed to the vessel during depressurisation may be maintained in the range 35-70 C at pressures above 40 bars according to an embodiment of the invention.

In an embodiment of the present invention the pressure of the fluid in the vessel may be reduced during the holding period prior to being fed to means for separation.

In another embodiment of the invention the rate of pressure increase during the pressurisation step may be typically in the range of 0,05-100 bar/min, such 0,1-20 bar/min, and preferably in the range of 0,1-15 bar/min, such as in the range of 0,2-10 bar/min.

Furthermore, the pressure increase during the holding period or pressurisation step may be obtained at least partially by increasing the temperature of the fluid fed to the vessel, said temperature increase being preferably obtained by adding heat to the fluid before being fed to the vessel according to the invention.

In yet another embodiment of the invention the rate of pressure increase during the pressurisation step and/or rate of pressure decrease during the depressurisation step may be controlled at least partially by adding or subtracting heat from the fluid, preferably the fluid being present in the re-circulation loop.

According to an embodiment of the present invention the temperature of the fluid fed to the vessel during all or some of the holding period may vary according to a predefined schedule in order to introduce pressure variations corresponding to the temperature variations in the vessel.

In another embodiment of the invention the temperature of the fluid fed to the vessel during all or some of the holding period may vary according to a predefined schedule, and the pressure may be maintained at a substantially constant level by adding or extracting fluid to/from the vessel in order to introduce density variations corresponding to the temperature variations in the vessel.

Additionally, the uppermost and lowermost levels of the temperature may according to an embodiment of the invention selected so as to provide a density change between the uppermost and lowermost level of up to 75 %, such as 50 % and preferable up to 30 %.

Advantageously, the diameter of the vessel according to the invention may be at least 10 cm, such as at 25 cm, preferably at least 40 cm, more preferably at least 60 cm, even more preferably at least 80 cm, and advantageously above 120 cm.

Furthermore, the pressure vessel according to the present invention may either be horizontally or vertically positioned.

Additionally, the re-circulation loop according to the present invention may comprise at least one heat exchanger for addition or extraction of heat to/from said fluid.

In another embodiment of the invention the re-circulation loop may comprise means for withdrawing and recirculating said fluid and wherein said means has/have a head of a magnitude substantially similar to the dynamic pressure loss in the recirculation loop.

In yet another embodiment said means may comprise a centrifugal pump, a centrifugal compressor, a piston pump and/or a piston compressor.

Furthermore, the total head of the means according to the invention may substantially be the same as the dynamic pressure loss in the re-circulation loop, thereby providing a high volumetric throughput rather than a large pressure head.

In an embodiment of the invention the pressure of the fluid present in any part of the external re-circulation loop may substantially be constant and in the same order magnitude as the pressure in the vessel at the specific stage in the cycle.

Advantageously, a coating or an impregnation treatment may according to an embodiment of the present invention be performed in the pressure vessel.

The re-circulation loop according to a preferred embodiment of the invention may further comprise a mixer vessel for mixing the fluid with chemicals and being arranged downstream of a heat exchanger.

Furthermore, the mixer vessel containing chemical(s) to may according to an embodiment of the invention be used for coating or impregnation.

Advantageously, an extraction treatment may be or may additionally be performed in the pressure vessel according to the present invention.

In another embodiment of the invention the re-circulation loop may comprise means for separating the supercritical fluid from extracted components.

Said means for separating the supercritical fluid from extracted components may furthermore according to the invention comprise one or more cyclone stages.

Furthermore, the pressure of said cyclones may be decreasing between each stage according to the invention.

In an embodiment of the invention the temperature of said cyclones may be decreasing between each stage.

In another embodiment of the invention the operating pressure and temperature of at least the last cyclone may be below the critical point of said supercritical fluid.

Additionally, the means for separating the supercritical fluid from extracted components may comprise or further comprise an activated carbon filter according to an preferred embodiment of the invention.

Furthermore, the separation may according to the invention be performed in a vessel comprising said supercritical fluid in both gaseous state and liquid state, the liquid phase being preferably controlled to a specific level in the vessel.

According to the present invention the separation may be performed in a gravimetric settling chamber comprising said supercritical fluid in both gaseous state and liquid state, the liquid phase being preferably controlled to a specific level in the vessel.

I an embodiment of the invention the method may further comprise at least one step of extraction of components from the material contained in the vessel, wherein said extraction comprising controlling the thermodynamical state in the vessel so as to obtain a pre-selected state in which extraction of components occur.

According to an embodiment of the invention said extraction of components may be performed at a temperature of maximum 25 °C less than the boiling point of said components being extracted, preferably at a temperature of maximum 15 °C less than the boiling point of said components being extracted, more preferably at a temperature of maximum 10 °C less than the boiling point of said components being extracted and most preferably at a temperature substantially at or above the boiling point of said components being extracted.

According to another embodiment of the invention said extraction of components from the material in the vessel may be performed at a temperature in vessel, which is close the maximum continuous operating temperature of the material contained in the vessel such as in the range -25 °C to + 25 °C of the maximum continuous operating temperature of the material to be treated, such as in the range -10 °C to + 10 °C of the maximum continuous operating temperature of the material to be treated.

Furthermore, said extraction of components from the material in the vessel may be performed at a temperature in the vessel, which is below the thermal decomposition temperature of said material in the vessel, according to the invention.

Additionally, the temperature in the vessel during said extracting of components from the material contained in the vessel, may according to the present invention be in the range 70-140 C.

According to an embodiment of the invention the pressure in the vessel during said extraction of components from the material contained in the vessel, may be in the range 100-500 bar, such as in the range 120-300 bar.

According to another embodiment of the invention the ratio of the amount of $CO_2$ used to extract said components from the material contained in the vessel to the amount of material contained in the vessel may be in the range 1 kg/kg to 80 kg/kg, such as in the range 1 kg/kg to 60 kg/kg, and preferably in the range 1 kg/kg to 40 kg/kg such as in the range 5 kg/kg to 20 kg/kg.

Advantageously, the components being extracted may according to the invention be components resulting in an undesired smell in the material to be treated.

Additionally, the components being extracted from the material in the vessel may in another embodiment of the present invention may comprise extraction of organics such as organic solvents, monomers, aromatic oils such as extender oil and organic acids.

In an embodiment of the invention the potential allerghenes may be reduced by at least 10 %, such as reduced by at least 25 %, and preferable reduced by at least 50 %.

Furthermore, the content of Zn may according to the present invention be reduced by at least 10 %, such as reduced by at least 25 %, and preferable reduced by at least 50 %.

In embodiment of the invention inorganic species such as heavy metals such as Zn may substantially be maintained in the material after the treatment.

Additionally, the thermodynamic state in the vessel may according to the present invention be controlled so as to obtain a selective extraction of components from the material contained in the vessel, while substantially maintaining other extractable components in the material.

Advantageously, said selective extraction may according to the present invention further be controlled by substantially saturating the extraction fluid with components desired to be maintained in the material in the vessel.

According to the invention said method may comprise subsequent extraction steps, wherein the thermodynamic state in each step is controlled so as to obtain a pre-selected state in which a pre-selected extraction of components from the material in the vessel occur.

Furthermore, the thermodynamic state in the first step may according to the present invention be selected so as to obtain a pre-selected state in which a pre-selected extraction resulting in an undesired smell in the material to be treated is substantially removed, while maintaining the majority of other extractable compounds such as extender oils, aromatic oils, antioxidants and antiozonants within the material to be treated.

In another embodiment of the present invention the thermodynamic state in the first step may be selected so as the total amount of extract being removed in the first step compared to the total amount of extractables is in the range 10-35 %. The total amount of extractables being determined by e.g. the SOXLETH method (ASTM D1416) using pentane as solvent.

In yet another embodiment of the invention the residual amount of aromatic oils, organic acids, antioxidants and antiozonants in the product may be at least 0.5 weight %, such as at least 1 weight %, and preferably at least 2 weight % such as at least 3 weight %, and the treated material being substantially free of smell.

Furthermore, the thermodynamic state in the first step may according to the present invention be controlled so as the temperature in the vessel may be in the range 65-100 C such as in the range 70-90 C, and is controlled so as the pressure in the vessel may be in the range 100-200 bar such as in the range 140 - 170 bar.

Additionally, the thermodynamic state in the second extraction step may according to the present invention be controlled so as the temperature in the vessel is in the range 80-140 C, and is controlled so as the pressure in vessel is in the range 200-300 bar.

In a preferred embodiment of the invention said method may further comprise at least one step of extraction of components from the material contained in the vessel, wherein said extraction comprising:

- controlling the thermodynamical state in the vessel so as to obtain a pre-selected state in which extraction of components occur,
- withdrawing from said vessel at least a part of the fluid contained within the vessel during said step(s) of extraction of components from the material contained in the vessel,and feeding it to a re-circulation loop for separation of extracted components from said fluid,
- separating at least partly said extracted components from said fluid at a pressure above the critical pressure of said fluid
- feeding said separated fluid to the vessel.

Furthermore, the pressure in the vessel for said extraction of components may according to the present invention be at least 150 bars, such as at least 200 bar, such as at least 300 bars.

According to the present invention the pressure for said separation of said extracted components from said fluid may at least be 1/2 of the of the pressure in the vessel for said extraction of components, such as at least 2/3 of the pressure in the vessel for said extraction of components, such as at least 3/4 of the pressure in the vessel for said extraction of components.

Advantageously, the thermodynamic state for separation of may according to the present invention be controlled so as the solubility of the extracted components in said fluid is maximum 20 % of the solubility of the extracted components at the pressure in the vessel for said extraction of components, such as is maximum 10 % of the solubility of the extracted components at the pressure in the vessel for said extraction of components, and preferable maximum 5 % of the solubility of the extracted components at the pressure in the vessel for said extraction of components.

Furthermore, said method further may according to the present invention be comprise at least at least one impregnation or coating step for impregnating the material contained in the vessel, wherein said impregnation or coating step comprising controlling the thermodynamically state in the vessel so as to obtain a pre-selected state in which impregnation components, such as one or more reactant contained in the vessel, impregnates or coates the material contained in the vessel.

According to the invention said impregnation or coating step may involve a chemical reaction.

Additionally, the chemical(s) used in said impregnation or coating step may according to the present invention be precursors for a chemical reaction.

Advantageously, said chemical reaction may according to the present invention be a silylation.

In a preferred embodiment of the present invention said chemical(s) may be impregnated or coated in substantially a monolayer on said material contained in the vessel.

In another embodiment of the present invention the surface coverage of said chemical(s) on said material contained in the vessel, may be at least 5 molecules/nm$^2$, such as at least 6 molecules/nm$^2$.

Furthermore, the holding period may according to the present invention be comprise one or more extraction steps, and wherein the extraction step is followed by one or more impregnation steps.

Additionally, the holding period may according to the present invention be comprise one or more extraction step(s), and followed by one or more impregnation step(s), and wherein the impregnation may be followed by one or more step(s) of increasing the temperature, and wherein the one or more steps of increasing the temperature may be followed by one or more steps of decreasing the temperature.

According to an embodiment of the invention the last step(s) of the holding period may comprise one or more extraction step(s).

According to another embodiment of the invention excess impregnation chemical(s) from the one or more impregnation step(s) may be extracted from said material contained in the vessel in said last one or more extraction step(s).

In a preferred embodiment of the invention a supercritical thermodynamical state may be maintained in the vessel during all of the steps in the holding period.

In another preferred embodiment of the invention the holding period may comprise one or more extraction steps, wherein the pressure in the vessel may be kept constant, and wherein the extraction step may be followed by one or more impregnation steps during which the pressure in the vessel may be kept substantially at the same level as during the impregnation step, and wherein no substantially pressure change occur in the vessel during change over from the extraction to the impregnation step.

According to the invention the method may further comprise a further impregnation step following the first impregnation step, and wherein the pressure during further impregnation step may be higher or lower than the pressure during the first impregnation step.

Additionally, the impregnation step or the further impregnation step may according to the present invention be followed by one or more steps of increasing the temperature, preferably while keeping the pressure constant, one or more of the one or more steps of increasing the temperature may preferably be followed by one or more steps of decreasing the temperature, preferably while keeping the pressure constant.

In an embodiment of the present invention said method may further comprise agitating the fluid and/or the material present in the vessel at least part time during the treatment of the material.

In another embodiment of the invention the vessel may be an agitated vessel, such as a fluidised bed, and/or preferably an expanded bed, and/or such as a motor driven mixer such as a rotating drum and/or an impeller.

According to a preferred embodiment of the invention the vessel may be a fluidised bed.

Furthermore, the material being fluidised may according to the present invention be the material to be treated.

According to another preferred embodiment of the invention the material being fluidised may be a bed material not being the material to be treated.

Additionally, the fluidisation may according to the present invention be obtained by the flow of the fluid being fed to the vessel.

Advantageously, said method may according to the present invention be further comprise spraying of coating or impregnation chemical(s) into said agitated vessel in at least part time of said depressurisation step.

According to the present invention said coating or impregnation chemical(s) may be sprayed into said agitated vessel as a slurry.

In a preferred embodiment of the present invention said coating or impregnation chemical(s) may be substantially insoluble in the fluid contained ion the vessel.

In another preferred embodiment of the present invention at least a first part of the fluid withdrawn from the vessel during depressurisation may be fed to a buffer tank having an outlet connected to the vessel either directly or via the re-circulation loop, wherein it is condensed, preferably by direct spraying into the liquid phase of said fluid.

By spraying the fluid direct into the buffer tank and thereby obtaining a condensation direct at the inside walls of the buffer tank in stead of using a condenser, such condensing equipment is no longer needed and it is thereby obtained to save cost and energy.

According to the invention at least a second part of fluid withdrawn from the vessel may be fed to a condenser wherein it is condensed, the condensed fluid being subsequently fed into a buffer tank having an outlet connected to the vessel either directly or via the recirculation loop.

By implementing the mentioned re-circulation or re-circulation loop in an embodiment of the present invention the method of treating a material contained in a vessel may be executed without mixing extractants and impregnation chemicals, or without the need to depressurise before impregnation of the material. An efficient process is hereby obtained since the treatment of extracting and impregnating the material may be executed in turns in a continuos process without depressurise the vessel all the way down the starting pressure for then again pressurise the vessel for the subsequent treatment. The re-circulation thereby is time and energy saving.

It further has the advantage of being able of extracting excess reactants such as monomers for a polymerisation reaction in a single stage process.

In an embodiment of the present invention the temperature in the buffer tank may be controlled so as to maintain substantially constant, said controlling being obtained at least partially by splitting the first and the second part of fluid being withdrawn from the vessel and fed to the buffer tank, thereby balancing the heat consumed by the evaporative cooling generated from the fluid being withdrawn from the buffer tank through the outlet thereof.

In another preferred embodiment if the invention the controlling of the temperature in the buffer tank may further comprise controlling the liquid level in the buffer tank by adding make-up fluid from a fluid make-up tank.

Furthermore, said method may according to the present invention comprise several treatment lines operating in parallel and in different states in the cyclic method, and wherein said several treatment lines are connected to said buffer tank and have:

- common feeding system(s) for pressurisation,
- common lines for depressurization including compressors,
- common condenser(s),
- common line(s) for spraying said fluid into the liquid phase
- common make-up system(s)

According to an embodiment of the invention said several treatment lines may comprise 2 to 6 lines, such as 3-4 lines.

Additionally, the pressure in said buffer tank may according to the present invention be in the range 55-70 bars, and preferably in the range 60-70 bars.

In an preferred embodiment of the invention the temperature in said buffer tank is in the range 12-30 C, and preferably in the range 15-25 C.

In another preferred embodiment of the invention the volume of the buffer tank compared to the total system volume of all treatment lines (excluding the buffer tank) may be in the range of 50-300%, such as in the range of 100-150%.

The present invention may further comprise a method of producing particles, preferably comprising nanocrystallites, said method utilises a method according to any of the preceding claims, wherein chemicals, such as reactants to form the particles by chemical reactions, are introduced into the fluid to participate in a particle formation process.

Said particle formation process may according to the present invention be selected among the following particle formation processes: RESS (rapid expansion of supercritical solutions), GAS (Gas Antisolvent), SAS (solvent Anti Solvent), SEDS (Solution Enhanced Dispersion by supercritical fluid), PCA (Precipitation with Compressed Antisolvent), PGSS (Precipitation from Gas-saturated Solutions) and variations thereoff.

Furthermore, additional nucleation sites in the vessel may according to the present invention be provided by addition of seed particles or filling material.

According to the present invention the number of nucleation sites may further be increased by introducing ultrasound or vibrating surface effect.

Additionally, the particles formed may according to the present invention have a crystallite size in the nanometer range.

Furthermore, said particles may according to the present invention comprise oxide(s) such as metal oxide(s).

In a preferred embodiment of the present invention said particle process may be a modified sol-gel process using a metal alkoxide as precursor.

In yet another embodiment of the invention said oxides is selected among silica, alumina, zirconia, titania, and mixtures thereof.

In a further embodiment of the invention said oxides is selected among ceria, yttria, zinc, iron, nickel, germania, barium, antimonia, and mixtures thereof.

Advantageously, said oxides may according to the present invention be a thermoelectrical material or a precursor for a thermoelectric material.

Additionally, said oxides may according to the present invention comprise a semi-conducting material.

Furthermore, said oxides may according to the present invention comprise a piezoelectric material.

According to a preferred embodiment of the present invention said thermoelectrical material may comprise $Bi_2Te_3$ or $Bi_2Te_3$ doped with semimetals and/or metals.

According to another preferred embodiment of the present invention said particles comprises carbide(s), nitride(s) or boride(s).

Additionally, said particles may according to the present invention comprise one or more pharmaceutical or biological material(s).

Furthermore, the material to be treated may according to the present invention be wood.

In a preferred embodiment of the invention the treatment may be an extraction and the components being extracted comprises terpenes and resins.

In another embodiment of the invention the wood may be impregnated with an organic fungicide or an organic insecticide.

Advantageously, the wood may according to the present invention be impregnated with chemical(s) comprising propiconazole.

Furthermore, the wood according to an embodiment of the invention may be impregnated with a chemical(s) comprising tebuconazole.

According to the present invention the wood may furthermore be impregnated with chemicals comprising IPBC.

In an embodiment of the invention the material treated may be cork.

In another embodiment of the invention the material to be treated may be a porous sorbent.

Additionally, said porous sorbent may according to the present invention be selected among aerogels, zeolites, silicagel, activated carbons, silicas, aluminas, zirconias, titanias.

Furthermore, said porous sorbent may according to the present invention have a pore size in the range 5-100 nm, such as in the range 5-50 nm and preferably in the range 5-20 nm.

According to an embodiment of the present invention said porous sorbent may be impregnated with a silane compound.

Advantageously, the chemical(s) for said impregnation or coating step may according to the present invention be selected among organosilanes, alkoxysilanes, chlorosilanes, fluorosilanes, such as octadecyl silanes, n-octadecyltriethoxysilane, n-octadecyldimethylmethoxysilane, perfluorooctyltriethoxysilane, hexamethyldisilazane, trichlorooctadecylsilane, mercaptopropylsilane, mercaptopropyltrimethoxysilane, ethylenedimaine, trimethoxysilane, trimethylchlorosilane, ODDMS, tetraethoxysilane.

Furthermore, said porous sorbent may according to the present invention be a functionalized porous sorbent for use for chromatographic separations.

Additionally, said functionalized porous sorbent may according to the present invention be used as stationary phase for liquid chromatography.

In a preferred embodiment of the present invention said porous sorbent may be used in a chromatographic column for the purification or analysis of pharmaceutical or biotechnological compounds.

Additionally, in an embodiment of the present invention said porous sorbent may be used in a chromatographic column for the purification or analysis of insuline.

Furthermore, the material being treated may according to the present invention be wool, preferably the method comprises extraction of lanoline.

In another embodiment of the present invention the material to be treated may be a polymer.

In yet another embodiment of the present invention the material to be treated may be a rubber.

Additionally, the material in the vessel may according to the present invention be a polymer or elastomer such as selected from the group consisting of polyethylene, polypropylene, polystyrene, polyesters, polyethylene terephtalate, polyvinyl chloride, polyvinyl acetates, polyoxymethylene, polyacryloamide, polycarbonate, polyamides, polyurethane, copolymers thereof, chlorinated products thereof, rubbers and chlorinated rubber, silicone rubbers, butadiene rubbers, styrene-budiene-rubbers, isoprene polymers, vulcanised fluororubbers, silicone rubbers.

In a preferred embodiment of the invention said material may be a recycled material.

In another preferred embodiment of the invention said material may be vulcanised rubber.

In yet a preferred embodiment of the invention said material to be treated may comprise vulcanised rubber.

Furthermore, the material to be treated may according to the present invention be a silicone rubber.

Advantageously, the material to be treated may according to the present invention be a particulate material such as a granulate, a powder or a fine powder.

According to an embodiment of the present invention said impregnation chemical(s) may comprise ethylene, propylene, styrene, acrylic esters, acrylic acids, urethanes, epoxides, epoxy resins.

Additionally, according to the invention said chemical(s) may comprise a radical initiator such as AIBN.

In a preferred embodiment of the present invention the impregnation chemical may be a pharmaceutical drug.

The invention further comprise an apparatus for use in treating a material, said apparatus comprising a vessel adapted to contain material to be treated and a fluid taking part in the treatment, said apparatus further comprising

- pressure means for increasing / decreasing the pressure in the vessel so as to perform at least one pressurisation step in which the pressure in the vessel in increased and at least one depressurisation step in which the pressure in the vessel is decreased
- and a recirculating loop for recirculating at least a part of the fluid, the recirculation loop being adapted to withdrawing from the vessel at least a part of the fluid contained within the vessel and feeding it to the re-circulation loop and subsequently feeding the fluid to the vessel.

Additionally, said apparatus may according to the invention further comprise

- agitating means for agitating, such as fluidise, the fluid and the material present in the vessel at least part time during treatment of the material.

Furthermore, said apparatus may in another preferred embodiment of the invention further comprise

- a fluid recovery device, preferably being condenser, in fluid communication with the vessel.

Advantageously, said fluid recovery device may according to the invention further comprise:

- means for withdrawing gaseous fluid from said fluid recovery device and feeding it to the vessel,
- means for withdrawing liquid fluid from said fluid recovery device and feeding it to the vessel,
- means for condensing fluid from the vessel by cooling
- means for condensing fluid by direct spraying into the liquid phase of said fluid recovery device.
- a heat exchanger immersed in said liquid phase of said fluid recovery device.

In an additional embodiment of the invention said fluid recovery device maycommunicate with several vessels such as 2-6 vessels.

Said apparatus may according to the invention further mans according to the above mentioned thereby being adapted to carry out the method according to any of the preceding claims.

The present invention may further relate to a product obtainable from any of the above mentioned method.

Additionally, the present invention may further relate to a treated wood product comprising impregnation chemical(s) such as propiconazole, tebuconazole, IPBC and mixtures thereof.

In a preferred embodiment of the invention said impregnation chemical(s) may be present in a concentration in the range 0,05-1,0 g/m3, such as in the range 0,1-0,5 g/m3 and preferably in the range 0,1-0,3 g/m3, such as in the range 0,15-0,25 g/m3.

In another embodiment of the present invention the wood product may be a preservation effect against fungis.

In yet another embodiment the wood product may have a preservation effect against insects such termites.

Furthermore, the concentration of components resulting in cork taint in wine such as Tri-Chloro-Anisole (TCA) may according to the invention be reduced with more than 95 %, such as more than 97,5 %, such as more than 99 %.

The present invention may further relate to a porous chromatographic material obtainable from any of the above mentioned method, wherein said material functionalized by a silylation impregnation and wherein said impregnation chemical(s) may be deposited substantially in a monolayer.

Additionally, said material may comprise a surface coverage of said impregnation chemical(s) of at least 5 molecules/nm$^2$ such as at least 6 molecules/nm$^2$.

The present invention may further relate to an odourless polymer product obtainable from any of the above mentioned method, wherein said product may be substantially free of adversely smelling compounds.

The present invention may further relate to a polymer product obtainable from any of the above mentioned method, wherein said material may be substantially free of excess monomers and volatile organic solvents.

In a preferred embodiment of the present invention said polymer product may comprise a rubber.

In another preferred embodiment of the present invention said rubber may comprise vulcanised rubber.

In yet another preferred embodiment of the present invention said non-smelling effect may be stable at least up to a temperature of 50 C, such as up 70 C, and preferably up to 90 C or more.

Furthermore, said non-smelling effect may according to an embodiment of the present invention be stable at least up to a temperature of 50 C, such as up 70 C, and preferably up to 90 C or more.

Advantageously, the rubber may according to an embodiment of the present invention comprise antioxidants and antiozonants in an amount of at least 0,25 weight %, such as at least 0,5 wt %.

Additionally, the residual amount of aromatic oils, organic acids and antiozonants in the product may according to another embodiment of the present invention be at least 0,5 weight %, such as at least 1 weight %, and preferable at least 2 weight %.

BRIEF DESCRIPTION OF THE DRAWINGS

FIG. 1 shows a typical pressure-time curve for a cyclic process for a supercritical treatment.

FIG. 2 shows a diagrammatic representation of the re-circulation principle according to the present invention.

Fig: 3 shows an example of the effect of pulsation in an impregnation process according to the present invention.

FIG. 4 shows an example of a prior art cyclic supercritical extraction process.

FIG. 5 shows diagrammatic representation of an extraction process according to the present invention

Fig. 6 shows a diagrammatic representation of a process layout suitable for operating any combination of a supercritical extraction process, a supercritical impregnation step, a particle formation step and a curing step at an elevated temperature.

DETAILED DESCRIPTION OF THE INVENTION AND PREFERRED EMBODIMENTS

The present invention is further illustrated by the drawings.

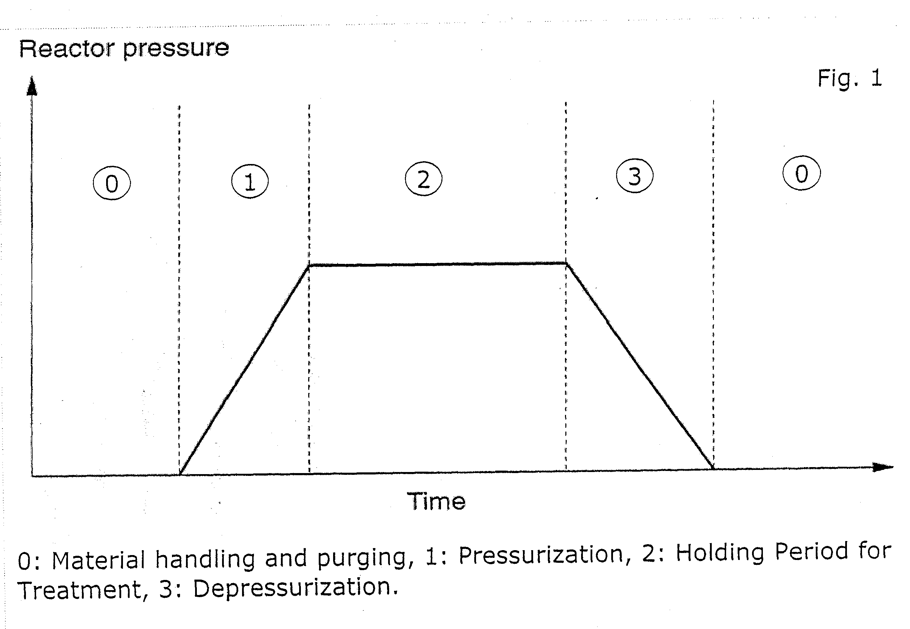

In FIG. 1, a pressure-time curve for a cyclic supercritical treatment process is shown. Initially, the material to be treated is loaded into a pressure vessel. After a certain material handling and purging time, the cyclic supercritical treatment process may be divided in to three consecutive steps:

1) a pressurisation period
2) a holding period for supercritical treatment at elevated pressure
3) a depressurisation period

In the pressurisation period the pressure vessel is pressurised by adding a fluid to the vessel until the pressure in the vessel exceeds the desired treatment pressure. The temperature in the vessel may be controlled by conventional means such as controlling the inlet temperature to the vessel in a heat exchanger before introducing the fluid into the pressure vessel and the temperature of the walls in the vessel, e.g. by using a jacketed pressure vessel with a heating or cooling fluid, electrical heating etc. The rate of pressure increase is shown to be constant, but may have any shape.

The holding period for treatment starts, when the desired pressure and temperature have been established. The treatment process may be an extraction or impregnation process, but may also be a particle formation process. During the holding period for treatment the pressure may be maintained substantially constant, or may be varied according to a predefined schedule as described in the examples.

After the holding period the pressure vessel is depressurised in a controlled manner as further described in the examples.

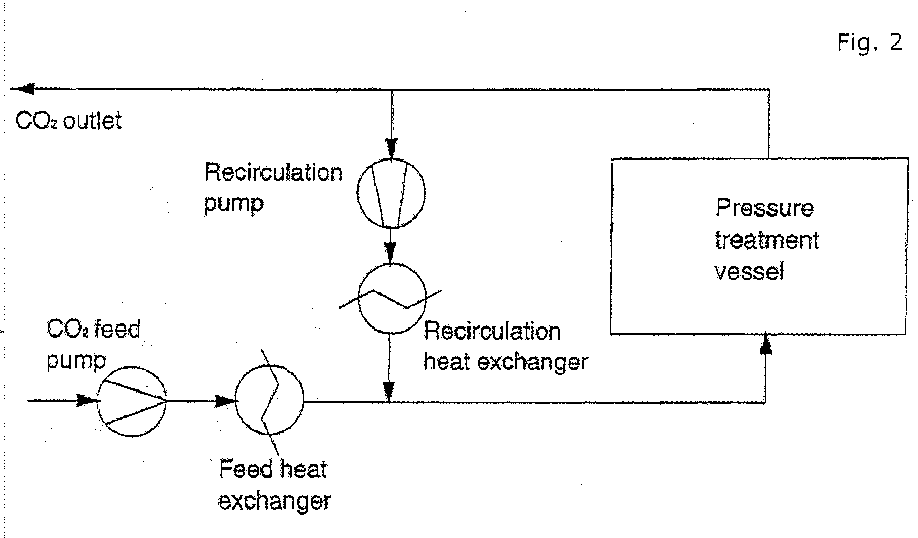

Fig. 2 is a diagrammatic representation of a re-circulation principle according to the present invention. The material to be treated is loaded into the pressure treatment vessel. The pressure treatment vessel is pressurised up to the desired operating pressure by feeding $CO_2$ to the pressure vessel by the $CO_2$ feed pump. The temperature of the feed is controlled by the feed heat exchanger. The pressure treatment vessel is depressurised by withdrawing CO2 from the vessel to the $CO_2$ outlet in a controlled manner. From/to a pressure below 70 bars such as below 60 bars, preferable below 40 bars, and advantageously from a pressure below 2 bars, part of the $CO_2$ in the pressure treatment vessel is withdrawn from the vessel to a re-circulation loop by the re-circulation pump, and returned to the pressure vessel after optionally passing a re-circulation heat exchanger for controlling the temperature in the vessel.

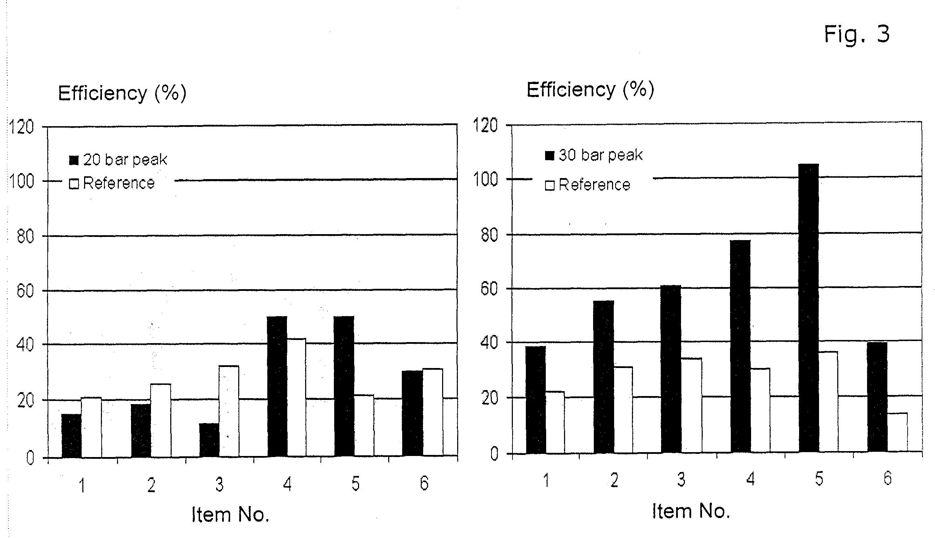

Fig. 3 shows results from a supercritical wood impregnation process, which is further exemplified in the examples 1 and 2.

A porous item to be impregnated is divided into two identical pieces so as to eliminate any effect of variations in the material to be treated.

In the experiment the reference items is first impregnated with an impregnation chemical at a substantially constant pressure of 150 bar and a temperature of 50 °C. The efficiency of the impregnation process is evaluated by the impregnation efficiency defined as the amount of the impregnation chemical present in the $CO_2$ phase compared to the amount of the impregnation chemical deposited in the items after treatment.

In the first experiment, the pressure vessel is first pressurised up to the reference conditions of approximately 150 bars and 50 °C, whereafter the vessel is depressurised to 130 bars under substantially constant temperature, whereafter the pressure vessel is pressurised again to 150 bars using the approximately the same concentration of the impregnation chemical in the $CO_2$ in the vessel. After the pressurisation, the pressure vessel is depressurised in a controlled manner. As seen from the left figure no significant effect on the impregnation efficiency is observed.

A second experiment is conducted in a similar manner, wherein the pressure level after the first depressurisation is reduced to 120 bars instead of 130 bars. As seen from the figure a significant improvement of the impregnation efficiency is obtained.

The results given in this figure is applicable for impregnation of porous materials in general, and in particular for impregnation of materials like rubber and cork.

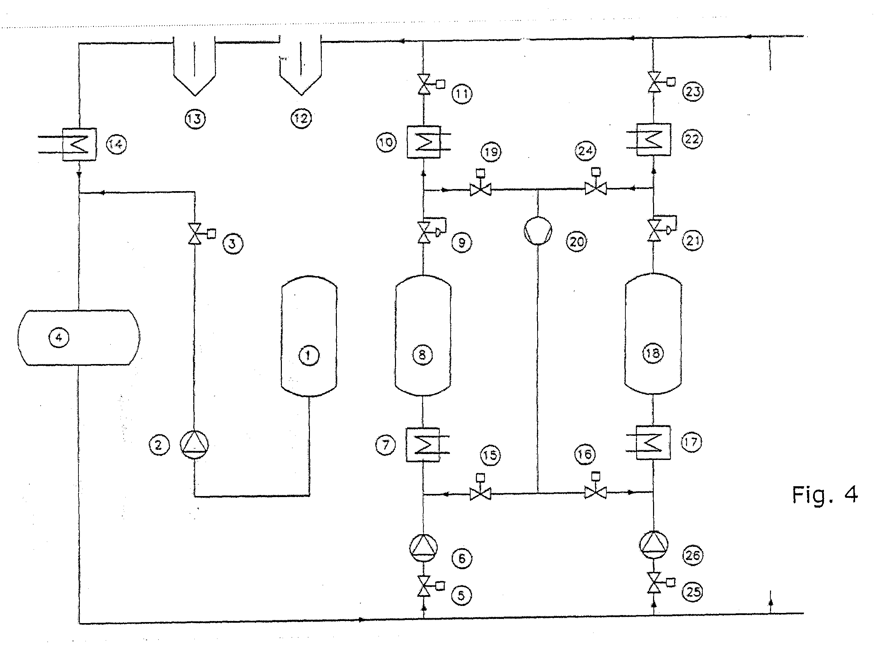

Fig. 4 shows a typical industrial multi vessel process i.e where several extraction vessels are used sequentially in parallel. However, for simplicity only 2 vessels (8, 18) are shown. The operating procedure is only described for the extraction vessel (8), and the procedure will be similar for the extraction vessel (18). The extraction vessel (8) is loaded with the material to be extracted. Liquid carbon dioxide is stored in the storage tank (1). Liquid $CO_2$ is transferred from the storage tank (1) via the pump (2) and the valve (3) to the intermediate storage tank (4).

When the plant is started up, liquid $CO_2$ from the intermediate storage tank (4) is transferred by the pump (6) to the extraction vessel (8), if the valve (5) is open. In the heat exchanger (7) the liquid $CO_s$ is evaporated and the temperature of the gaseous $CO_2$ is controlled. The pressurization of the extraction vessel (8) by means of the pump (6) and the evaporator (7) is continued until the operating pressure in the supercritical region is reached.

The cyclic supercritical extraction process is now performed by expanding $CO_2$ through the control valve (9), adjusting the temperature in the heat exchanger (10) and further expanding the $CO_2$ through the valve (11) and subsequently separating the extracted material in the separation units (12, 13). Subsequently the $CO_2$ is liquefied in the condenser (14) and returned to the intermediate storage (4), from where it is transferred back into the extraction vessel via the pump (6) and the evaporator (7).

Supercritical $CO_2$ is thus continuously circulated through the extraction vessel (8) for the required amount of time to reach the required extraction yield.

After the extraction process has been finalized the vessel (8) are depressurized. This is in the prior art process accomplished by opening valves (15, 16). The pressure in vessel (18) is substantial ambient pressure and by opening the valves (15, 16) the pressures between vessels (8, 18) are equalized. By the expansion of the $CO_2$ from vessel (8) to vessel (18) the $CO_2$ is cooled and to avoid formation of liquid $CO_2$ or dry ice, heat has to be added in the heat exchangers (7, 17).

Further emptying of vessel (8) is accomplished by extracting $CO_2$ from vessel (8) via the valves (9, 19) and the compressor (20). As the temperature of the $CO_2$ is increased during compression, the $CO_2$ gas stream has to be cooled in heat exchanger (17) before entering the vessel (18).

As the pressure in vessel (8) reaches a level of typically 2-5 bar the emptying operation will stop. The residual $CO_2$ in vessel (8) is vented to the atmosphere and additional $CO_2$ is added to vessel (18) from liquid intermediate storage (4) through the pump (20) and heat exchanger (17) until the operating pressure of vessel (18) is reached. The cyclic extraction process can now be performed with vessel (18) in the same manner as described for vessel (8).

A disadvantage of such prior art process is that the energy consumption is high due to the liquefaction of the fluid and due to the need for re-heating the fluid before entering the pressure vessel. Further equipment costs is increased due to a high heat transfer area required in the condenser and in the heating/cooling system compared to the present invention.

A further disadvantage of such prior art process is the fact that the rate of pressurization and depressurization of the vessels cannot be controlled independently as two vessels at all times are interconnected. Generally by transferring $CO_2$ directly from one vessel to the next, the possibility of optimizing both pressurization and depressurization rates independently are lost.

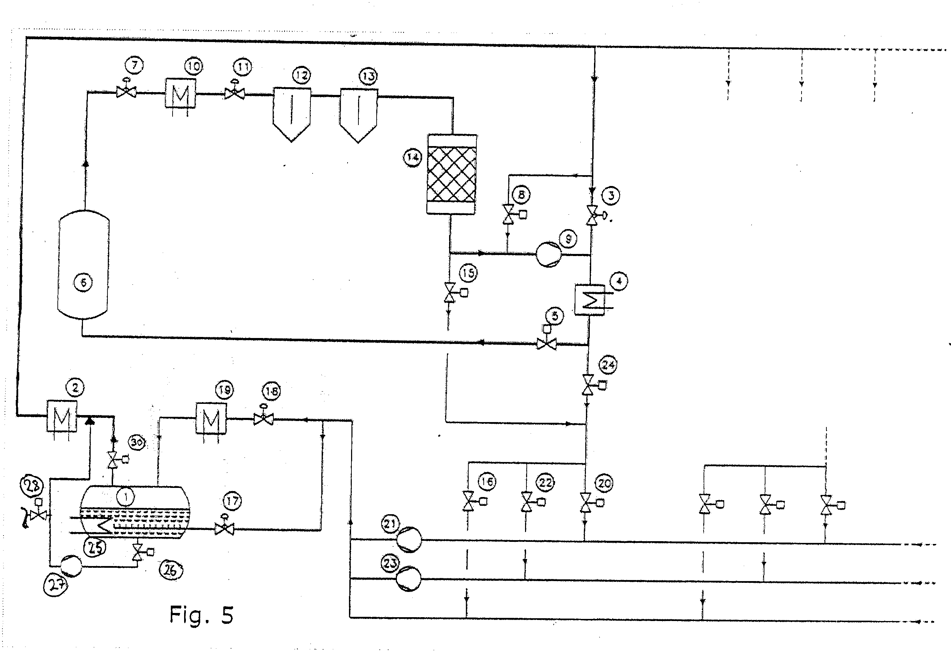

Fig. 5 illustrates the principles of an industrial scale supercritical process for the extraction of Tri-Chloro-Anisole (TCA) from cork according to the present invention. TCA represents a major quality problem for wines stored in bottles with cork stoppers due to the development of the so-called "cork taste". Development of cork taste may destroy the wine and make it undrinkable.

It should be understood that process comprises several extraction lines operating in parallel as indicated in the figure. Typically a process according to the present invention comprises 2-6 lines operating sequentially in different stages of the cyclic process. The various lines share some major components, such as the buffer tank (1), the control valves (17), (18), the condenser (19), the heat exchanger (2), and the compressors (21), (23). These shared components are described in details below. For simplification only one vessel is shown in the figure.

A typical cyclic supercritical extraction process is performed as follows:

$CO_2$ is stored/recovered in a common buffer tank (1) shared between several extraction lines as indicated on the figure. The pressure in the buffer tank (1) will typically be in the range 50-70 bars, and preferably at a pressure of approximately 60 bars. The level of the liquid $CO_2$ in the buffer tank (1) is controlled by pumping liquid $CO_2$ from a make up tank (not shown in the drawing), and the pressure is controlled by controlling the temperature in the buffer tank (1). When starting the pressurisation of vessel (6) gaseous $CO_2$ is drawn from buffer tank (1) and piped at a predetermined rate through a heat exchanger (2), valve (3), heat exchanger (4), and valve (5). Optionally liquid $CO_2$ may also be withdrawn from the buffer tank through the valve (26), the pump (27) and the valve (28). Withdrawing gaseous $CO_2$ from the buffer tank (1) generates an evaporative cooling in the buffer tank (1), which is further described below. From a pressure of about 2 bar part of the $CO_2$ in the vessel is withdrawn and re-circulated by the compressor (9). The $CO_2$ from the compressor (9) is mixed with the $CO_2$ from the buffer tank (1) after the valve (3). When the vessel (6) has reached a pressure slightly below the pressure in the buffer tank, then valve (3) is closed and valve (8) is opened and the compressor (9) is used to compress the gaseous $CO_2$ from approx. 60 bar to the final supercritical pressure for the extraction, which typically is 120 bar. Throughout the pressurisation process the compressor (9) operates and provides a large re-circulation rate through the vessel (6). This allows for optimum control of temperature and heat and mass transfer throughout the vessel. The extraction process is accomplished by purging typically 10-100 kg $CO_2$ per kg cork granulate through the vessel (6) at a temperature of typically 60° C. The $CO_2$ exiting vessel (6) is expanded through the valve (7) reheated in the heat exchanger (10) and expanded through the valve (11). Subsequently TCA and other components like waxes are removed in the separators (12, 13) whereupon the $CO_2$ is cleaned for residual content of TCA in an active carbon filter (14). The $CO_2$ exiting the carbon filter (14) is recompressed in the compressor (9) and the temperature controlled in the heat exchanger (4) to provide the required pressure and temperature for the extraction in the vessel (6). When depressurising the vessel (6) vapour phase $CO_2$ is piped in a controlled manner through valve (15), valve (16). The major part of the $CO_2$ is generally entering the buffer tank (1) through valve (17), from where it is condensed by direct spraying into the liquid $CO_2$ phase in the buffer tank (1). Part of the $CO_2$ pass through the valve (18) into the condenser (19), where the $CO_2$ gas is liquefied before entering the buffer tank (1). As heat is generated from the direct condensation in the buffer tank (1), the heat need to be removed in order maintain a substantially constant temperature in the buffer tank (1). This is done by balancing the heat consumed by the evaporative cooling generated from the gas being withdrawn from the buffer tank (1). This balancing of the temperature in the buffer tank is performed by

a) Controlling the split between the amount of $CO_2$ entering the buffer tank (1) as a liquid through the valve (18) and the condenser (19), and the amount of $CO_2$ being introduced directly into the liquid phase in the buffer tank (1) through the valve (17),
b) Fine tuning of the temperature in the buffer tank by extracting or adding heat through the heat exchanger (25) immersed in the liquid phase in the buffer tank (1) and/or optionally withdrawing liquid $CO_2$ from the buffer tank (1) to an external heat exchanger (not shown) and re-circulating the liquid $CO_2$ to the buffer tank (1),
c) Controlling the liquid level in the buffer tank (1) by adding make up $CO_2$ from a $CO_2$ make-up tank (not shown)

It should be noticed that the buffer tank (1) needs to have a certain volume in order to work properly as a buffer tank, and in order to damp potential fluctuations of the temperature and pressure in the tank. The volume of the buffer tank compared to the total system volume of all lines (excluding the buffer tank (1)) is generally in the range 50-300 %, and preferably in the range 100-150 %.

The further depressurisation of extraction vessel (6) from approx. 60 bars to a pressure in the range 20-30 bars is performed through valve (15), valve (20) and compressor (21). The valve (24) is closed during this operation to ensure that no back flow occur. The compressor (21) will generally be a one-stage compressor. After the compressor the $CO_2$ is discharged to the buffer tank (1) through the valves (17) and/or (18) and heat exchanger (19) as described above for the pressure range 120-60 bars.

It should be noticed that depressurisation from 60 to a pressure in the range 20-30 bars also could be performed using the re-circulation compressor (9), but a system of two compressors is generally preferred due to capacity and redundancy considerations.

The depressurisation of the vessel from a pressure in the range 20-30 bars to a pressure in the range 2-6 bars (6) is performed through the valve (22) by the compressor (23). After the compressor the $CO_2$ is again discharged to the buffer tank (1) through the valves (17) and/or (18) and heat exchanger (19) as described above. The final depressurisation is performed by venting off the fluid vessel to the atmosphere (not shown). The pressure for this depressurisation step is set by the desired recovery of the $CO_2$. If a high $CO_2$ recovery is desired, the pressure for the final stage will typically be in the range 1-3 bars above ambient pressure. In this case the compressor (23) will comprise a three stage compressor. If a lower $CO_2$ recovery is desired, the compressor (23) may comprise a 2 stage compressor.

It should be noticed that the compressors (21, 23) are generally only in used in a limited part of cyclic process, such as 10-35 % of the total cycle time. As such compressors are relatively expensive the compressors (21, 23) are preferably shared between several extraction lines as indicated in the figure. It should further be noticed that the compressors (21, 23) may comprise more than one compressor operating in the same pressure range in order to fulfil redundancy or economical demands.

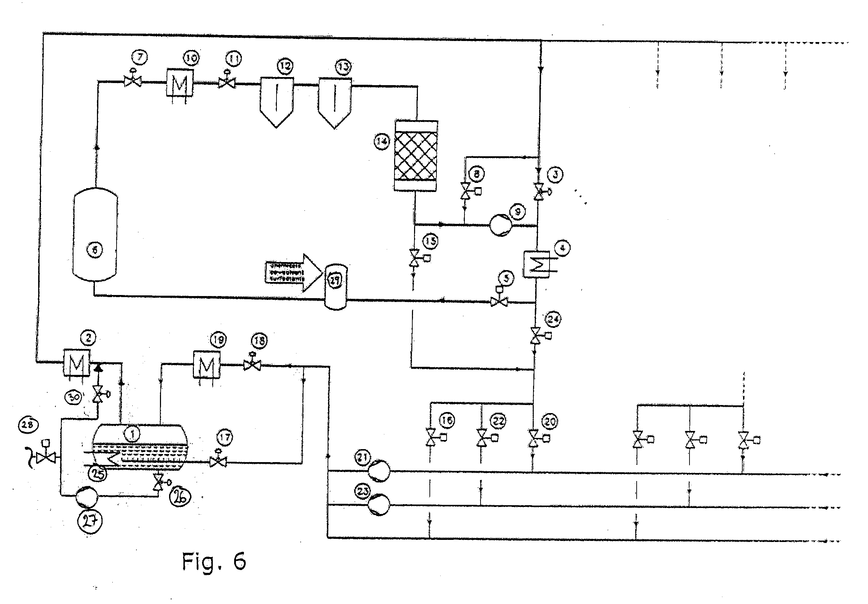

Fig. 6 shows a diagrammatic representation of a process layout suitable for operating any combination of steps of a supercritical extraction step, a supercritical impregnation step, a particle formation step, and/or a curing step at an elevated temperature. Compared to the extraction process according to the present invention shown in Fig. 5. this process diagram further comprise a mixer vessel (29) in the re-circulation loop for addition of chemical(s), and/or cosolvent (s)and/or surfactants. The mixer is preferably containing a high surface area packing material so as to provide a high contact area for addition of said chemical(s), and/or cosolvent(s), and/or surfactant(s). It should be understood that said chemical(s), cosolvent(s) and/or surfactant(s) may be added to the same vessel but said re-circulation loop may comprise more than one mixer for addition of said chemical(s), and/or cosolvent(s) and/or surfactants separately.

Preferred combinations of said supercritical extraction step(s), supercritical impregnation step(s) and curing step(s) at elevated temperature step are:

a) An extraction process, wherein the holding period for extraction is followed by a holding period for impregnation at substantially the same pressure level as for the holding period for extraction.
b) An extraction process, wherein the holding period for extraction is followed by a holding period for impregnation at substantially the same pressure level as for the holding period for extraction, and further followed by a final extraction process to remove excess impregnation chemicals.
c) An extraction process, wherein the holding period for extraction is followed by a holding period for impregnation at substantially the same pressure level and wherein said impregnation period is followed by a curing step at elevated temperature, and optionally finalised by a final extraction step before depressurisation.

d) A process as described in d), wherein the impregnation step and subsequent curing step at elevated temperature is repeated multiple times so as to the control the impregnation level.

EXAMPLES

ILLUSTRATIVE EXAMPLE 1:

CYCLIC PROCESS FOR SUPERCRITICAL IMPREGNATION

The conventional supercritical impregnation process includes 3 consecutive steps:

The material to be treated is introduced into a pressure vessel.

In the first step the vessel is pressurized by adding a fluid to the reactor, until the pressure in the vessel exceeds the desired pressure of said fluid.

The temperature of the fluid may be controlled by conventional means before the introduction into the vessel, and the temperature in the reactor is further controlled by controlling the wall temperature, to a level exceeding the desired temperature of the fluid. At the established temperature and pressure the enclosed fluid in the vessel enters the supercritical state, and the impregnation compounds become soluble in the fluid. As pressurisation of the vessel is achieved by introducing fluid, and as the fluid by definition is compressible, further compression of the fluid takes place in the vessel. The derived heat of compression is dissipated in the materials enclosed in the reactor, and finally removed through the reactor walls. The heat of compression may lead to a significant temperature increase. If for example carbon dioxide is compressed from 1 bar to 200, which is a normal impregnation pressure, the corresponding adiabatic temperature increase exceeds 100 °C. It is obvious to one skilled in the art, that the presence of a solid porous material filling most of the internal vessel volume is hindering the dissipation of heat through the walls, as convective heat transport is hindered, and that the effect of the hindrance is proportional to the distance from the vessel center to the wall, i.e. increasing with increasing vessel diameter. Therefore large-scale supercritical impregnation in conventional equipment is accompanied by an unwanted heating of the material being impregnated, which might lead to crucial damage of thermo sensitive materials like wood. Furthermore, the flow of the supercritical fluid into the porous material to be impregnated creates a force acting on the material, which might cause further damage, particularly as the mechanical strength of the material is reduced at increasing temperature.

The second step is a treatment at practically constant temperature and pressure, during which impregnation compounds are distributed throughout the material to be impregnated. Furthermore, during this step the heat of compression is dissipated to the vessel walls, if sufficient residence time is allowed, establishing the intended temperature throughout the reactor.

Upon the treatment, depressurisation is conducted in the third step, by controlled evacuation of the fluid from the vessel. The expansion of the fluid leads to reduced solubility of the impregnation compounds, which therefore precipitate at the internal surfaces of the porous material, providing the intended impregnation. The energy required to expand the fluid is taken from the remaining fluid, and the other materials in the reactor, and finally balanced by heat introduced through the reactor walls. During the depressurisation the expanding fluid is flowing from the inside to the outside of the porous material to be impregnated. As heat is supplied through the reactor walls and required inside the porous material, heat and mass fluxes are oppositely directed, causing a very poor heat conductance. Therefore local cold spots are formed inside the porous material, at which condensation of the expanding fluid might occur, once the critical pressure and temperature is passed. Formation of liquid in the pores of the material dramatically increases the flow resistance, leading to formation of very large forces acting on the porous structure, which therefore shows tendency to cracking or bursting. Once again, the impact of the heat transfer hindrance is increased at increasing vessel diameter. In order to avoid structural damage to the impregnated material, a very slow depressurisation rate have to be applied.

ILLUSTRATIVE EXAMPLE 2

CYCLIC PULSATION PROCESS FOR SUPERCRITICAL IMPREGNATION

During the holding period for impregnation period of the supercritical impregnation, as described in the example 1, the pressure and temperature are maintained practically constant. Consequently distribution of the impregnation compounds in the porous material to be impregnated is mainly due to diffusion, as no convective supercritical solvent flow exist inside the porous material. To enhance and accelerate the impregnation compound distribution, a pressure pulsation may be induced during the impregnation period, creating a convective flow inside the porous structures. In order to preserve the dissolved impregnation compounds inside the vessel, the pressure pulsation is preferably induced by a pulsation of the supercritical solvent inlet temperature, i.e. by alternating in a cyclic pattern the set point of the heat exchanger in the re-circulation loop. By pulsating the pressure, a pumping effect is created in the porous material, which very efficiently equals out any gradients in temperature or solute concentrations existing in the material.

A further benefit from the pressure pulsation during the impregnation period may be derived in the case where the lower limit of the cyclic pressure pulsation is below the solubility limit of the impregnation compounds at the applied temperature and intended concentration of impregnation compounds in the supercritical solvent. The solubility of a substance in a supercritical solvent is to a first approximation determined by the solvent temperature and density, i.e. by reactor temperature and pressure. The solubility limit is defined as the lower pressure at a certain temperature, at which the intended amount of a substance is soluble. If the pressure is reduced below this limit, precipitation takes place.

If a supercritical impregnation is executed at an impregnation pressure above the solubility limit, but with pressure pulsation reducing the reactor pressure below the solubility limit during the impregnation period, the following is taking place; during the last part of the pressurization and the first part of the impregnation period, the porous structure will be filled with supercritical solvent containing dissolved impregnation compounds. During the pressure reduction part of the pulse the solubility limit is broken, and precipitation of the dissolved compounds on the interior surfaces of the porous material takes place. During the pressurization part of the pulse, supercritical solvent is introduced into the porous structure from the reactor bulk, carrying in more dissolved impregnation compounds, which are precipitated during the next pulse. The net result is an active transport of impregnation compounds into the material to be impregnated caused by the pressure pulsation.

The effect of such pulsation is verified in experiments, impregnating spruce cut in pieces. Every log is parted in two identical pieces, with one serving as reference, i.e. being impregnated according to the method described in example 2, and the other being impregnated with pulsation, and otherwise identical process parameters. The wood is impregnated at a pressure of 150 bar and a temperature of 50 °C, with an impregnation compound addition corresponding to a solubility limit of approximately 125 bar. The concentration of impregnation compound precipitated in the wood is determined by chemical analysis. The expected deposition of the compound is calculated as the concentration dissolved in the bulk solvent phase, multiplied with the solvent volume entrapped in the wood at impregnation conditions, i.e. the deposition achieved if the total amount of solvent introduced into the wood was carrying a full load of impregnation compound. The impregnation efficiency is defined as the ratio of the measured deposition to the expected deposition.

The impregnation efficiency derived from pulsating impregnation above the solubility limit is described in the left part of the figure, and denoted "20 bar peak". The effect of pulsation above the solubility limit is rather limited, as no significant increase in impregnation efficiency is found, when compared to the reference pieces.

Impregnation with pulsation below the solubility limit is shown in the right part of the figure, and denoted "30 bar peak". The effect of pulsation below the solubility limit is significant. The impregnation efficiency is doubled, when compared to the reference logs.

ILLUSTRATIVE EXAMPLE 3

CYCLIC SUPERCRITICAL EXTRACTION PROCESS WITH RECIRCULATION

One aspect of the present invention involves a cyclic process for supercritical extraction treatment of materials.

Hence, in a preferred embodiment of the present invention the material to be treated by the supercritical extraction process is initially loaded in to a pressure vessel.

In many applications, the cyclic process is initiated by purging the vessel with the specific fluid used in the cyclic process in order to minimize contamination of the fluid. This purging may be conducted by applying a vacuum (pressure below ambient pressure) to the vessel, while feeding the specific fluid to the vessel for a certain period of time. Typically this purging time will be in the range 1-20 minutes. In other cases this purging may be performed by pressurisation of the vessel up to a pressure of 0,5-5 bars above ambient pressure and venting the vessel until the pressure is substantially the same as ambient pressure. It should be understood that any combination of purging using a vacuum and venting from a pressure above ambient pressure may be applied and that this procedure may be repeated.

After the purging period the vessel is pressurised by the specific fluid at a predetermined inlet temperature to the vessel and a predetermined rate of pressure increase in the vessel.

In many applications the inlet temperature to the vessel will be controlled to achieve a temperature within the pressure vessel above the condensation temperature of the specific fluid, and below a certain maximum temperature dictated by the material to be treated in the vessel. The inlet temperature of supercritical fluid is typically controlled in the range 0-200 °C, such as 0-150°C, and preferably in the range 15-100 °C and more preferably in the range 35-60 °C during pressurization. The set point for the inlet temperature may be constant during the pressurisation period, but in many applications according to the present invention the inlet temperature is increasing during the pressurisation period.

As described above control of temperature within the vessel is critical for many applications. In the prior art, temperature control is performed by control of inlet temperature and/or control of the inlet and outlet temperature of a heating or cooling fluid fed to a jacketed vessel. However, applying such systems for large diameter vessels, creates temperature gradients within the vessels as the heat transfer area is not large enough to ensure sufficient heat transfer capacity.

Hence, in a preferred embodiment of the present invention part of the fluid is withdrawn from the vessel in at least part of the pressurisation period, and fed to an external re-circulation loop comprising at least one heat exchanger for adding or extracting heat from the fluid, where after the fluid is re-circulated to the pressure vessel after conditioning. It is further preferred that the fluid do not undergo a phase change in the external re-circulation loop during the pressurisation period.

The withdrawing of the fluid from the vessel to the external re-circulation loop is preferably performed from a pressure below 40 bars such as a pressure below 20 bar, and advantageous at a pressure below 2 bars.

In order to maximize the effect of the re-circulation the fluid flow withdrawn needs to have a certain size. Hence, in a preferred embodiment according to the present invention, the fluid flow corresponds to replacement of at least one vessel volume per hour, such as at least 5 vessel volumes per hour, and preferably at least 10 vessel volumes per hour and more preferably between 10-50 vessel volumes per hour and advantageously in the range 10-20 vessel volumes per hour.

The rate of pressure increase is typically in the range 0,05-100 bar/min, such as 0,1-20 bar/min and preferably in the range 0,1-15 bar/min, such as in the range 0,2-10 bar/min.

The rate of pressure increase may be constant or vary during the pressurisation period. Generally means for pressurisation have a constant volumetric flow rate. Hence, the maximum mass flow rate of said means increases with the density of the fluid used for pressurisation. Hence, for a constant temperature within the vessel the rate of pressure increase will vary with the fluid density if said means were operating at maximum capacity during the pressurisation period. However, in addition to the increase of the mass transfer mass flow rate, the rate of pressure increase may also be obtained by increasing the temperature to the vessel or by a combination of the two.

However, many materials relevant for the present invention are characterised by loosing/decreasing their mechanical strength at temperatures above a certain level and increasing the pressurisation rate above a certain level at specific temperatures results in pressure damages of the material being treated. It has been found that certain pressure intervals exist in which the risk of such pressure damages are particularly high.

Hence, one aspect of the present invention involves controlling the rate of pressurisation and the temperature in specific pressure intervals during the pressurisation period, while operating higher rates outside this interval. It has been found that the rate of pressure increase is particularly critical in the pressure range from 40 to 120 bars, such as in the range 60 to 110 bars, and in particular in the range 65 to 100 bars. Hence, in a preferred embodiment the rate of pressurisation in at least part of the interval 40 to 120 bars is at the most one half of the maximum rate of pressurisation outside this range, such as one third of the maximum rate of pressurisation, and preferably at the most one fifth of the maximum rate of pressurisation, and more preferably at the most one tenth of maximum rate of pressurisation outside this pressure range.

In many applications, the majority of the fluid fed to the vessel is $CO_2$. However, it may also comprise other fluids such as one or more co-solvents, one or more surfactants or impurities such as air and/or water and/or traces of the extracted compounds.

Suitable surfactants are hydrocarbons and fluorocarbons preferably having a hydrophilic/lipophilic balance value of less than 15, where the HLB value is determined according to the following formula:

```
HLB   =   7   +   sum(hydrophilic   group   numbers)-
sum(lipophilic group numbers)
```

Examples and descriptions of surfactants can be found in the prior art e.g. WO9627704 and EP0083890, which hereby with respect to disclosure concerning surfactants and their preparation are incorporated herein by reference.

The temperature and pressure during the holding period for extraction depend of the specific substrate to be treated and the species to be extracted.

Examples of suitable co-solvents are water, ethane, ethylene, propane, butane, sulfurhexafluoride, nitousoxide, chlorotrifluoromethane, monofluoromethane, methanol, ethanol, DMSO, isopropanol, acetone, THF, acetic acid, ethyleneglycol, polyethyleneglycol, N,N-dimethylaniline etc. and mixtures thereoff.

The pressure during the holding period for extraction will typically be in the range 85-500 bar. The target temperature during the extraction period will typically be 35-200 °C such as 40-100 °C.

During the holding period for extraction, part of the fluid is continuously withdrawn from the vessel. The extracted species is separated from the extraction fluid by decreasing the pressure in one or more steps. Each step comprising a separator for separating said extracted compounds from the extraction fluid. Non-limiting examples of suitable separators are gravimetric settling chambers, cyclones and polyphase separators. After separation of the extracted species from the extraction fluid, the extraction fluid may be further purified in an activated carbon filter before re-circulation to the pressure vessel.

The duration of the holding period for extraction will typically be in the range 5-300 minutes.

As for the pressurisation period the re-circulation flow rate during the holding period needs to be of a certain size in order to enhance mass transfer and to obtain a substantially uniform extraction quality in the whole pressure vessel. Hence, in a preferred embodiment according to the present invention, the fluid flow withdrawn corresponds to replacement of at least one vessel volume per hour, such as at least 5 vessel volumes per hour, and preferably at least 10 vessel volumes per hour and more preferably between 10-50 vessel volumes per hour and advantageously in the range 10-20 vessel volumes per hour.

After the pressurisation period, the vessel is depressurised at a controlled temperature and rate of depressurisation.

Hence, in another aspect of the present invention part of the fluid is withdrawn from the vessel in at least part of the depressurisation period, and fed to an external re-circulation loop comprising at least one heat exchanger for adding or extracting heat from the fluid, where after the fluid is re-circulated to the pressure vessel after conditioning. It is further preferred that the fluid do not undergo a phase change in the external re-circulation loop during the depressurisation period.

For some materials the inlet temperature in at least part of the depressurisation period may advantageously be increased compared to the inlet temperature of the holding in order to compensate for the considerable cooling arising from the expansion. Typically, the inlet temperature during depressurisation may be increased by up to 10 °C, such as up to 25 °C compared to the inlet temperature during the holding period. The actual inlet temperature during depressurisation will typically be maintained in the range 35-70 C at pressures above 40 bars.

As for the pressurisation and holding periods, the re-circulation flow rate during the depressurisation period needs to be of a certain size in order to ensure substantially uniform pressure-, temperature- and density conditions within the vessel. Hence, in a preferred embodiment according to the present invention, the fluid flow withdrawn during the depressurisation period corresponds to replacement of at least one vessel volume per hour, such as at least 5 vessel volumes per hour, and preferably at least 10 vessel volumes per hour and more preferably between 10-50 vessel volumes per hour and advantageously in the range 10-20 vessel volumes per hour.

According to the present invention the rate of depressurisation is typically in the range 0,05-100 bar/min, such as 0,1-20 bar/min and preferably in the range 0,1-15 bar/min, such as in the range 0,2-10 bar/min.

It has further been found that many materials may be damaged during depressurisation if the depresssurisation rate is too high in specific pressure regions, while operation in other regions can be performed at considerable higher depressurisation rates. More specifically it has been found that the rate of depressurisation is critical at pressures below 110 bars, such below 90 bars, and in particular in the range 15 to 90 bars. Outside this range operation at considerable higher depressurisation rates is possible without damaging the material.

Hence, in a preferred embodiment of the present invention, the rate of depressurisation in at least part of the pressure interval below 110 bars is at the most one half of the maximum rate of depressurisation outside this range, such as one third of the maximum rate of depressurisation, and preferably at the most one fifth of the maximum rate of depressurisation, and more preferably at the most one tenth of maximum rate of depressurisation outside this pressure range.

The depressurisation period may further comprise one or more holding periods at constant pressure in which the pressure and temperature conditions inside the material is allowed to stabilise.

In the pressure interval above 2-5 baro the expanded fluid is typically recovered for reuse. Below a pressure below 5 baro such as below 2 baro, the fluid is typically vented off at a controlled depressurisation rate.

Before opening the pressure vessel and unloading the material, the vessel is generally purged with air in order to avoid any exposure risk by the fluid, when opening the vessel. This purging may be conducted by applying a vacuum (pressure below ambient pressure) to the vessel, while feeding air to the vessel for a certain period of time. Typically this purging time will be in the range 1-20 minutes. In other cases this purging may be performed by pressurisation of the vessel with air up to a pressure of 0,5-5 bars above ambient pressure and venting the vessel until the pressure is substantially the same as ambient pressure. It should be understood that any combination of purging using a vacuum and venting from a pressure above ambient pressure may be applied and that this procedure may be repeated.

ILLUSTRATIVE EXAMPLE 4

CYCLIC SUPERCRITICAL EXTRACTION PROCESS WITH RECIRCULATION AND PULSATION

A substantial discussion of the many uses of supercritical fluid extraction is set forth in the text "Supercritical Fluid Extraction" by Mark McHugh and Val Krukonis (Butterworth-Heinmann, 1994). Supercrical fluid extraction is often applied for materials comprising confined spaces i.e. micro- or nanoporous structures. Despite higher diffusivity than liquids, supercritical fluids still exhibit limited ability to rapidly transfer extracted material from confined spaces to a bulk supercritical phase. Lack of thorough mixing of the fluid in the bulk phase, and between the fluid in the bulk phase and the fluid in the confined spaces limits the mass transfer rate to essentially the diffusion rate of the solute(s) [see e.g. EP 1,265,683]. It should further be noticed that a pressure and/or temperature gradient generally exist between the bulk phase and the centre of the confined space thereby creating a convective transport of the fluid into the confined space. Thus, the diffusive transport of solutes needs to take place in the opposite direction of the convective transport, thereby reducing the efficiency of the process and thereby increasing processing costs.

Various attempts have been made to by apply pressure pulses to provide a pumping effect to address this problem. Wetmore et al (US 5,514,220) teaches that cleaning of porous material can be improved by raising or spiking the extraction pressure by at least 103 bar between the uppermost and lowermost levels of extraction pressure. Other examples of pressure pulse cleaning is given in US 5,599,381, US 4,163,580, and US 4,059,308). Common for these prior methods is that while such large pressure swings provides significant improved extraction efficiencies (up to 7 fold), they result in severe cooling of the supercritical fluid and the pressure vessel due to the Joule-Thompson effect. For instance, at a temperature of 50 °C a pressure drop of 103 bars results in an adiabatic drop in temperature of approximately 18,5 °C. Such large pressure pulses and temperature drops are undesirable as they may induce fatigue problems of the pressure vessel, and further may cause the fluid to condense either in the confined spaces (capillary condensation) or even in the bulk phase. Horhota et al (EP 1,265,583) discloses a pressure modulation technique, where repeated pressure pulses of less than 30 % relative difference between the uppermost and lowermost pressure levels are applied in an attempt to overcome the drawbacks of the large pressure pulse techniques. Small pressure pulses according EP 1,265,583 may provide enhanced mixing in bulk phase, and may be suitable for applications such as supercritical parts cleaning. However, small pressure pulses will not create the desired significant pumping effect, when applied for low permeability materials such as micro- or nanoporous materials.

A further objective of the present invention is to provide a method for improving the mass and heat transfer in a cyclic dense fluid extraction process not suffering the drawbacks in the prior art.

Hence, according to an aspect of the present invention a cyclic dense fluid extraction process is performed as described in example 3, wherein

- part of the fluid is continuously withdrawn from the pressure vessel during the holding period,
- the extracted species is separated from the extraction fluid by decreasing the pressure in one or more steps,
- each of said step comprises separation means for separating said extracted compounds from the fluid,
- said separated fluid is fed to one or more heat exchanger(s) for addition or extraction of heat,
- and re-circulated to the pressure vessel

characterised in that the inlet temperature to the vessel is modulated between two or more temperature levels so as to provide a modulation in the fluid density within the vessel.

In a preferred embodiment the uppermost and lowermost levels of the inlet temperature is selected so as to provide a density change between the uppermost and the lowermost level of up 75 %, such as up to 50 %, and preferable up to 30 %.

The temperature modulation is generally performed at least two times and may be repeated multiple times such as 5-100 times.

In order to achieve the desired efficiency, the volume of the fluid withdrawn from the pressure vessel needs to be of a certain size such as corresponding to replacement of at least 5 vessel volumes per hour and preferably in the range 10-50 vessel volumes per hour such as replacement of 10-20 vessel volumes per hour

The temperature modulation is in particular effective for enhancing mass- and heat transfer efficiency for a supercritical extraction process during the holding period. However, temperature modulation also be applied in the pressurisation and/or the depressurisation period for minimisation of the temperature-and/or pressure gradients between the bulk phase and the centre of a confined space. This particularly relevant in relation to the treatment of low permeability materials containing confined spaced in a micro- or nanoporous structure.

In another aspect of the present invention, the temperature modulation of the inlet temperature is performed in combination with a pressure pulsation technique.

In a further aspect of the present invention said temperature modulation is performed during the holding period and combined with an overall pressure control loop for maintaining the pressure in the pressure vessel substantially constant by adding or extracting fluid to/from the pressure vessel.

In another preferred embodiment of the present invention the temperature modulation of the inlet is combined with a pressure modulation or pressure pulsation technique, wherein the lowermost pressure level are obtained at substantially the same time as the uppermost temperature level and vice versa.

ILLUSTRATIVE EXAMPLE 5

CYCLIC SUPERCRITICAL EXTRACTION PROCESS FOR TREATMENT OF POLYMERS

Another aspect of the present invention involves supercritical treatment of polymers containing impurities such as excess monomers and/or solvents from the polymerisation reaction. Other undesired impurities may be compounds resulting in an unpleasant smell, or compounds limiting the further processing of the materials, such as reduced adhesion. Examples of such components are extender oils, and/or organic acids present in recycled vulcanised rubbers.

Hence, in a preferred embodiment of the present invention such treatment of polymers, which undergoes a supercritical extraction process as described in example 3 and 4 in order to remove the undesirable residues, and make the materials suitable for further processing. The removal of these components makes the polymer matrix more porous and more accessible for e.g. modification by reactive impregnation or adhesive.

ILLUSTRATIVE EXAMPLE 6

CYCLIC SUPERCRITICAL TREATMENT OF PARTICULATE MATTER

Many important aspects of the present invention involve supercritical treatment of particulate matter. In such applications it is often desirable to introduce movement and/or mixing of/in the particulate phase. Hence, for such applications it may further be advantageous to use an agitated vessel such as a fluidised bed or a motor driven mixer such as an impeller or rotating drum in addition to the re-circulation and pulsation methods described herein.

ILLUSTRATIVE EXAMPLE 7

CYCLIC SUPERCRITICAL EXTRACTION AND IMPREGNATION

Another aspect of the present invention involves the supercritical treatment of a material as described in the examples 3-6, wherein the material subsequent to the holding period for extraction, further undergoes a holding period for impregnation prior to the depressurisation period. Said impregnation period is preferably performed at substantially the same average pressure as for the extraction period.

During said holding period for impregnation part of the fluid is withdrawn from the pressure vessel and fed to an external re-circulation loop further comprising at least one mixer vessel for addition of impregnation chemicals and/or co-solvents and/or surfactants to the fluid before re-circulating the fluid to the pressure vessel. Said mixing vessel(s) for addition of chemicals are preferable positioned after the heat exchanger(s) for adding or extracting heat and is operating at substantially the same pressure as the pressure within the pressure vessels.

The chemicals may be added to the mixer vessel at the beginning of the cyclic process, or at any part of the cyclic process.

It is further generally preferred to apply a pulsation method as described in example 2 and 4 in both the holding period for extraction and the holding period for impregnation in order to improve the effiency of both the extraction and impregnation process. Hence, in a preferred embodiment according to the present invention part of the fluid is continuously withdrawn from the pressure vessel and fed to a re-circulation loop comprising one or more heat exchanger(s) for addition or extraction of heat, and re-circulated to the pressure vessel. The inlet temperature to the vessel is modulated between two or more temperature levels in order to provide a modulation in the fluid density within the vessel, while an overall control loop is maintaining the pressure within the pressure vessel substantially constant by adding or extracting fluid to/from the pressure vessel.

After the holding period for impregnation the pressure vessel is depressurised according to the methods described in examples 3-6.

ILLUSTRATIVE EXAMPLE 8:

SUPERCRITICAL PRODUCTION OF NANOPARTICLES ACCORDING TO THE CURRENT INVENTION

Supercritical fluids are excellent solvents for reactive particle formation, leading to nano-particle products with very narrow size distribution.

The basis of the reactive particle formation method is a chemical system, in which reactants are soluble in the solvent utilized, while the reaction products are insoluble. An example of such system is metal oxides, formed from reaction between metal alcoholates and water. Due to the insolubility of the product the chemical reaction rapidly produces a supersaturated product solution, and hence precipitation starts to take place in the reaction vessel. The precipitation is initiated at, and grows from, any available nucleation site, i.e. vessel walls or seed particles present in the vessel. Precipitation, and accordingly particle growth, continues until the solution is no longer supersaturated. If a sufficiently high number of nucleation sites are provided in the reaction vessel, precipitation time and thereby particle growth is restricted, and very small particles - in the nano-meter range - with a very narrow size distribution and high degree of crystalinity are formed. Examples of ways to introduce the nucleation sites to the reaction vessel are addition of seed particles or a filling material.

In order to ensure the narrow particle size distribution, precipitation time must be controlled accurately, i.e. super-saturation must be achieved in all parts of the vessel at the same time. Several conditions must be fulfilled to achieve such homogenous super-saturation; the mixing of reactants must be homogenous, the chemical reaction should be relatively fast compared to the precipitation time, and the solvent properties should be carefully controlled to ensure homogenous solubility throughout the vessel. Both reactant mixing and solvent property control are facilitated through the circulation loop of the present invention.

By treatment lines mentioned is meant treatment processes or just lines.

CERTAIN EMBODIMENTS

Embodiment AA: A method of treating a material contained in a vessel, said method involves a fluid present in the vessel and comprising at least one pressurisation step in which the pressure in the vessel is increased and at least one depressurisation step in which the pressure in the vessel is decreased.

Embodiment AB: A method according to embodiment AA, further comprising recirculating in at least part time of the method at least a part of the fluid, the re-circulating comprising: withdrawing from the vessel at least a part of the fluid contained within the vessel and feeding it to a re-circulation loop and subsequently feeding the fluid to the vessel.

Embodiment AC: A method according to embodiment AA, further comprising a holding step in which the pressure in the vessel is substantially constant and/or in which the pressure of the fluid in the vessel is varied according to a pre-selected schedule during a holding period of predetermined length, the fluid is preferably at supercritical conditions during the holding period.

Embodiment AD: A method according to any of embodiments AA-AC, further comprising the step of controlling the temperature of the fluid in the recirculation loop.

Embodiment AE: A method according to any of embodiments AA-AD, wherein heat is added to and/or extracted from the fluid in the recirculation loop.

Embodiment AF: A method according to any of embodiments AA-AE, wherein the method controls temperature-, pressure- and/or density profiles within the vessel.

Embodiment AG: A method according to any of embodiments AA-AF, wherein the fluid after the pressurisation step is in a supercritical state.

Embodiment AH: A method according to any of embodiments AA-AG, wherein said fluid is selected from the group consisting of carbon dioxide, alcohol, water, methane, ethane, ethylene, propane, butane, pentane, hexane, cyclohexane, toluene, heptane, benzene, ammonia, sulfurhexafluoride, nitrousoxide, chlorotrifluoromethane, monofluoromethane, methanol, ethanol, DMSO, propanol, isopropanol, acetone, THF, acetic acid, ethyleneglycol, polyethyleneglycol, N,N-dimethylaniline etc. and mixtures thereof.

Embodiment AI: A method according to any of embodiments AA-AH, wherein said fluid is carbon dioxide.

Embodiment AJ: A method according to any of embodiments AA-AI, wherein said fluid further comprises at least one cosolvent.

Embodiment AK: A method according to embodiment AJ, wherein the cosolvent is selected from the group consisting of alcohol(s), water, methane, ethane, ethylene, propane, butane, pentane, hexane, heptane, ammonia, benzene, sulfurhexafluoride, nitrousoxide, chlorotrifluoromethane, monofluoromethane, methanol, ethanol, DMSO, isopropanol, acetone, THF, acetic acid, ethyleneglycol, polyethyleneglycol, N,N-dimethylaniline etc. and mixtures thereof.

Embodiment AL: A method according to any of embodiments AA-AK, wherein fluid further comprises one or more surfactants, said surfactants being preferably selected from the group consisting of hydrocarbons and fluorocarbons preferably having a hydrophilic/lipophilic balance value of less than 15, where the HLB value is determined according to the following formula: HLB = 7 + sum(hydrophilic group numbers)-sum(lipophilic group numbers).

Embodiment AM: A method according to any of embodiments AA-AL, wherein the fluid after the depressurisation step is in a gas and/or liquid and/or solid state.

Embodiment AN: A method according to any of embodiments AB-AM, wherein the fluid present in the re-circulation loop has substantially the same thermodynamical properties as the fluid within the vessel, such as the fluid does not undergo a phase change to a liquid or solid state.

Embodiment AO: A method according to any of embodiments AB-AN, wherein re-circulation is performed during the pressurisation step and/or during the depressurisation step and/or, when in accordance with one of embodiments AC-AN, during the holding step.

Embodiment AP: A method according to one of embodiments AB-AO, wherein part of the fluid in the pressure vessel is withdrawn to the re-circulation loop from/to a pressure in the pressure vessel below 70 bar, such as from/to a pressure below 60 bars, preferably from/to a pressure below 40 bars, and advantageously from/to a pressure below 2 bar.

Embodiment AQ: A method according to any of embodiments AA-AP, wherein the fluid volume withdrawn from the vessel corresponds to the exchange of at least one vessel volume per hour, such as at least two vessel volume exchanges per hour, preferably at least 5 vessel volume exchanges per hour, and advantageously at least 10 vessel volume exchanges per hour, and preferably in the range of 10 to 20 vessel volume exchanges per hour.

Embodiment AR: A method according to any of embodiments AA-AQ, wherein the pressure in the vessel after pressurisation step is in the range 85-500 bar, preferably in the range 85-300 bar such as 100-200 bar.

Embodiment AS: A method according to any of embodiments AA-AR, wherein the temperature in the vessel is maintained in the range 20-300 °C, such as a 30-150 °C, preferable as 35-100 °C, such as 40-60 C

Embodiment AT: A method according to any of embodiments AA-AS, wherein the rate of (de)pressurisation is controlled in a predefined manner in specific pressure intervals during the (de)pressurisation period.

Embodiment AU: A method according to embodiment AT, wherein the rate of pressure increase in at least part of the pressure range from 40 to 120 bars is at the most one half of the maximum rate of pressurisation outside this range, such as one third of the maximum rate of pressurisation, and preferably at the most one fifth of the maximum rate of pressurisation, and more preferably at the most one tenth of maximum rate of pressurisation outside this pressure range.

Embodiment AV: A method according to embodiment AT, wherein the rate of depresssurisation rate in at least part of the pressure interval below 110 bars is at the most one half of the maximum rate of depressurisation outside this range, such as one third of the maximum rate of depressurisation, and preferably at the most one fifth of the maximum rate of depressurisation, and more preferably at the most one tenth of maximum rate of depressurisation outside this pressure range.

Embodiment AW: A method according to any of embodiments AA-AV, wherein the temperature of the fluid being fed into vessel during depressurisation is increased by up to 10 °C, such as up to 25 °C compared to the inlet temperature during the holding period.

Embodiment AX: A method according to any of embodiments AA-AW, wherein temperature of the fluid being fed to the vessel during depressurisation is maintained in the range 35-70 C at pressures above 40 bars.

Embodiment AY: A method according to any of embodiments AA-AZ, wherein the pressure of the fluid in the vessel is reduced during the holding period prior to being fed to means for separation.

Embodiment AZ: A method according to any of embodiments AA-AY, wherein the rate of pressure increase during the pressurisation step is typically in the range of 0,05-100 bar/min, such 0,1-20 bar/min, and preferably in the range of 0,1-15 bar/min, such as in the range of 0,2-10 bar/min.

Embodiment BA: A method according to any of embodiments AA-AZ, wherein the pressure increase during the holding period or pressurisation step is obtained at least partially by increasing the temperature of the fluid fed to the vessel, said temperature increase being preferably obtained by adding heat to the fluid before being fed to the vessel.

Embodiment BB: A method according to any of embodiments AB-BA, wherein the rate of pressure increase during the pressurisation step and/or rate of pressure decrease during the depressurisation step is controlled at least partially by adding or subtracting heat from the fluid, preferably the fluid being present in the re-circulation loop.

Embodiment BC: A method according to any of embodiments AA-BB, wherein the temperature of the fluid fed to the vessel during all or some of the holding period varies according to a predefined schedule in order to introduce pressure variations corresponding to the temperature variations in the vessel.

Embodiment BD: A method according to embodiment BC, wherein the temperature of the fluid fed to the vessel during all or some of the holding period varies according to a predefined schedule, and the pressure is maintained at a substantially constant level by adding or extracting fluid to/from the vessel in order to introduce density variations corresponding to the temperature variations in the vessel.

Embodiment BE: A method according to embodiment BC or BD30, wherein the uppermost and lowermost levels of the temperature is selected so as to provide a density change between the uppermost and lowermost level of up to 75 %, such as 50 % and preferable up to 30 %.

Embodiment BF: A method according to any of embodiments AA-BE, wherein the diameter of the vessel is at least 10 cm, such as at 25 cm, preferably at least 40 cm, more preferably at least 60 cm, even more preferably at least 80 cm, and advantageously above 120 cm.

Embodiment BG: A method according to any of embodiments AF, wherein the pressure vessel is horisontally positioned.

Embodiment BH: A method according to any of embodiments AA-BG, wherein the pressure vessel is vertically positioned.

Embodiment BI: A method according to any of embodiments AB-BH, wherein the re-circulation loop comprises at least one heat exchanger for addition or extraction of heat to/from said fluid.

Embodiment BJ: A method according to any of embodiments AB-BI, wherein the re-circulation loop comprises means for withdrawing and recirculating said fluid and wherein said means has/have a head of a magnitude substantially similar to the dynamic pressure loss in the recirculation loop.

Embodiment BK: A method according to embodiment BJ, wherein said means comprises a centrifugal pump, a centrifugal compressor, a piston pump and/or a piston compressor.

Embodiment BL: A method according to embodiment BJ or BK, wherein the total head of the means is substantially the same as the dynamic pressure loss in the re-circulation loop, thereby providing a high volumetric throughput rather than a large pressure head.

Embodiment BM: A method according to any of embodiments AB-BL, wherein the pressure of the fluid present in any part of the external re-circulation loop is substantially constant and in the same order magnitude as the pressure in the vessel at the specific stage in the cycle.

Embodiment BN: A method according to any of embodiments AA-BM, wherein a coating or an impregnation treatment is performed in the pressure vessel.

Embodiment BO: A method according to any of embodiments AB-BN, wherein the re-circulation loop further comprises a mixer vessel for mixing the fluid with chemicals and being arranged downstream of a heat exchanger.

Embodiment BP: A method according to embodiment BO, wherein the mixer vessel containing chemical(s) to be used for coating or impregnation.

Embodiment BQ: A method according to any of embodiments AA-BP, wherein an extraction treatment is or is additionally performed in the pressure vessel.

Embodiment BR: A method according to embodiment BQ, wherein the re-circulation loop comprises means for separating the supercritical fluid from extracted components.

Embodiment BS: A method according to embodiment BR, wherein said means for separating the supercritical fluid from extracted components comprises one or more cyclone stages.

Embodiment BT: A method according to embodiment BS, wherein the pressure of said cyclones is decreasing between each stage.

Embodiment BU: A method according to embodiment BS or BT, wherein the temperature of said cyclones is decreasing between each stage.

Embodiment BV: A method according to any of embodiments BS-BU, wherein the operating pressure and temperature of at least the last cyclone is below the critical point of said supercritical fluid.

Embodiment BW: A method according to any of embodiments BR-BV, wherein the means for separating the supercritical fluid from extracted components comprises or further comprises an activated carbon filter.

Embodiment BX: A method according to any of embodiments BR-BW, wherein the separation is performed in a vessel comprising said supercritical fluid in both gaseous state and liquid state, the liquid phase being preferably controlled to a specific level in the vessel.

Embodiment BY: A method according to any of embodiments BR-BX, wherein the separation is performed in a gravimetric settling chamber comprising said supercritical fluid in both gaseous state and liquid state, the liquid phase being preferably controlled to a specific level in the vessel.

Embodiment BZ: A method according to any of embodiments AA-BY, said method further comprising at least one step of extraction of components from the material contained in the vessel, wherein said extraction comprising controlling the thermodynamical state in the vessel so as to obtain a pre-selected state in which extraction of components occur.

Embodiment CA: A method according to embodiment BZ, wherein said extraction of components is performed at a temperature of maximum 25 °C less than the boiling point of said components being extracted, preferably at a temperature of maximum 15 °C less than the boiling point of said components being extracted, more preferably at a temperature of maximum 10 °C less than the boiling point of said components being extracted and most preferably at a temperature substantially at or above the boiling point of said components being extracted.

Embodiment CB: A method according to any of embodiments BZ-CA, wherein said extraction of components from the material in the vessel is performed at a temperature in vessel, which is close the maximum continuous operating temperature of the material contained in the vessel such as in the range -25 °C to + 25 °C of the maximum continuous operating temperature of the material to be treated, such as in the range - 10 °C to + 10 °C of the maximum continuous operating temperature of the material to be treated.

Embodiment CC: A method according to any of embodiments BZ-CB, wherein said extraction of components from the material in the vessel is performed at a temperature in the vessel, which is below the thermal decomposition temperature of said material in the vessel.

Embodiment CD: A method according to any of embodiments BZ-CC, wherein the temperature in the vessel during said extracting of components from the material contained in the vessel, is in the range 70-140 C.

Embodiment CE: A method according to any of embodiments BZ-CD, wherein the pressure in the vessel during said extraction of components from the material contained in the vessel, is in the range 100-500 bar, such as in the range 120-300 bar.

Embodiment CF: A method according to any of embodiments BZ-CE, wherein the ratio of the amount of $CO_2$ used to extract said components from the material contained in the vessel to the amount of material contained in the vessel is in the range 1 kg/kg to 80 kg/kg, such as in the range 1 kg/kg to 60 kg/kg, and preferably in the range 1 kg/kg to 40 kg/kg such as in the range 5 kg/kg to 20 kg/kg.

Embodiment CG: A method according to any of embodiments BZ-CF, wherein the components being extracted are components resulting in an undesired smell in the material to be treated.

Embodiment CH: A method according to any of embodiments BZ-CG, wherein the components being extracted from the material in the vessel comprises extraction of organics such as organic solvents, monomers, aromatic oils such as extender oil and organic acids.

Embodiment CI: A method according to any of embodiment BZ-CH, wherein potential allerghenes are reduced by at least 10 %, such as reduced by at least 25 %, and preferable reduced by at least 50 %.

Embodiment CJ: A method according to any of embodiments BZ-CI, wherein the content of Zn is reduced by at least 10 %, such as reduced by at least 25 %, and preferable reduced by at least 50 %.

Embodiment CK: A method according to any of embodiments BZ-CJ, wherein inorganic species such as heavy metals such as Zn are substantially maintained in the material after the treatment.

Embodiment CL: A method according to any of embodiments BZ-CK, wherein the thermodynamic state in the vessel is controlled so as to obtain a selective extraction of components from the material contained in the vessel, while substantially maintaining other extractable components in the material.

Embodiment CM: A method according to embodiment CL, wherein said selective extraction is further controlled by substantially saturating the extraction fluid with components desired to be maintained in the material in the vessel.

Embodiment CN: A method according to any of embodiments CL-CM, wherein said method comprises subsequent extraction steps, wherein the thermodynamic state in each step is controlled so as to obtain a pre-selected state in which a pre-selected extraction of components from the material in the vessel occur.

Embodiment CO: A method according to embodiment CN, wherein the thermodynamic state in the first step is selected so as to obtain a pre-selected state in which a pre-selected extraction resulting in an undesired smell in the material to be treated is substantially removed, while maintaining the majority of other extractable compounds such as extender oils, aromatic oils, antioxidants and antiozonants within the material to be treated.

Embodiment CP: A method according to embodiment CO, wherein the thermodynamic state in the first step is selected so as the total amount of extract being removed in the first step compared to the total amount of extractables is in the range 10-35 %. The total amount of extractables being determined by e.g. the SOXLETH method (ASTM D1416) using pentane as solvent.

Embodiment CQ: A method according to any of embodiments CN-CP, wherein the residual amount of aromatic oils, organic acids, antioxidants and antiozonants in the product is at least 0.5 weight %, such as at least 1 weight %, and preferably at least 2 weight % such as at least 3 weight %, and the treated material being substantially free of smell.

Embodiment CR: A method according to any of embodiments CN-CQ, wherein the thermodynamic state in the first step is controlled so as the temperature in the vessel is in the range 65-100 C such as in the range 70-90 C, and is controlled so as the pressure in the vessel is in the range 100-200 bar such as in the range 140 -170 bar.

Embodiment CS: A method according to any of embodiments CN-CR, wherein the thermodynamic state in the second extraction step is controlled so as the temperature in the vessel is in the range 80-140 C, and is controlled so as the pressure in vessel is in the range 200-300 bar.

Embodiment CT: A method according to any of embodiments BZ-CS, said method further comprising at least one step of extraction of components from the material contained in the vessel, wherein said extraction comprising:

- controlling the thermodynamical state in the vessel so as to obtain a pre-selected state in which extraction of components occur,
- withdrawing from said vessel at least a part of the fluid contained within the vessel during said step(s) of extraction of components from the material contained in the vessel,and feeding it to a re-circulation loop for separation of extracted components from said fluid,
- separating at least partly said extracted components from said fluid at a pressure above the critical pressure of said fluid
- feeding said separated fluid to the vessel.

Embodiment CU: A method according to embodiment CT, wherein the pressure in the vessel for said extraction of components is at least 150 bars, such as at least 200 bar, such as at least 300 bars.

Embodiment CV: A method according to embodiment CU, wherein the pressure for said separation of said extracted components from said fluid is at least 1/2 of the of the pressure in the vessel for said extraction of components, such as at least 2/3 of the pressure in the vessel for said extraction of components, such as at least 3/4 of the pressure in the vessel for said extraction of components.

Embodiment CW: A method according to any of embodiments CT-CV, wherein the thermodynamic state for separation of is controlled so as the solubility of the extracted components in said fluid is maximum 20 % of the solubility of the extracted components at the pressure in the vessel for said extraction of components, such as is maximum 10 % of the solubility of the extracted components at the pressure in the vessel for said extraction of components, and preferable maximum 5 % of the solubility of the extracted components at the pressure in the vessel for said extraction of components.

Embodiment CX: A method according to any of embodiments AA-CW, said method further comprising at least at least one impregnation or coating step for impregnating the material contained in the vessel, wherein said impregnation or coating step comprising controlling the thermodynamical state in the vessel so as to obtain a pre-selected state in which impregnation components, such as one or more reactant contained in the vessel, impregnates or coates the material contained in the vessel.

Embodiment CY: A method according to embodiment CX, wherein said impregnation or coating step involves a chemical reaction.

Embodiment CZ: A method according to embodiment CY, wherein the chemical(s) used in said impregnation or coating step are precursors for a chemical reaction.

Embodiment DA: A method according to any of embodiments CX-CY, wherein said chemical reaction is a silylation.

Embodiment DB: A method according to any of embodiments CX-DA, wherein said chemical(s) are impregnated or coated in substantially a monolayer on said material contained in the vessel.

Embodiment DC: A method according to any of embodiments CX-DB, wherein the surface coverage of said chemical(s) on said material contained in the vessel, is at least 5 molecules/nm$^2$, such as at least 6 molecules/nm$^2$.

Embodiment DD: A method according to any of embodimens AC-DC, wherein the holding period comprises one or more extraction steps, and wherein the extraction step is followed by one or more impregnation steps.

Embodiment DE: A method according to embodiment DD, wherein the holding period comprises one or more extraction step(s), and followed by one or more impregnation step(s), and wherein the impregnation is followed by one or more step(s) of increasing the temperature, and wherein the one or more steps of increasing the temperature is followed by one or more steps of decreasing the temperature.

Embodiment DF: A method according to embodiment DE, wherein the last step(s) of the holding period comprises one or more extraction step(s).

Embodiment DG: A method according to embodiment DF, wherein excess impregnation chemical(s) from the one or more impregnation step(s) are extracted from said material contained in the vessel in said last one or more extraction step(s).

Embodiment DH: A method according to any of embodiments DE-DG, wherein a supercritical thermodynamical state is maintained in the vessel during all of the steps in the holding period.

Embodiment DI: A method according to any of embodiments AC-DH, wherein the holding period comprising one or more extraction steps, wherein the pressure in the vessel is kept constant, and wherein the extraction step is followed by one or more impregnation steps during which the pressure in the vessel is kept substantially at the same level as during the impregnation step, and wherein no substantially pressure change occur in the vessel during change over from the extraction to the impregnation step.

Embodiment DJ: A method according to embodiment DI, wherein the method further comprises a further impregnation step following the first impregnation step, and wherein the pressure during further impregnation step is higher or lower than the pressure during the first impregnation step.

Embodiment DK: A method according to any of embodiments DI-DJ, wherein the impregnation step or the further impregnation step is followed by one or more steps of increasing the temperature, preferably while keeping the pressure constant, one or more of the one or more steps of increasing the temperature is preferably followed by one or more steps of decreasing the temperature, preferably while keeping the pressure constant.

Embodiment DL: A method according to any of embodiments AA-DK, said method further comprising agitating the fluid and/or the material present in the vessel at least part time during the treatment of the material.

Embodiment DM: A method according to any of embodiments AA-DL, wherein the vessel is an agitated vessel, such as a fluidised bed, and/or preferably an expanded bed, and/or such as a motor driven mixer such as a rotating drum and/or an impeller.

Embodiment DN: A method according to any of embodiments AA-DM, wherein the vessel is a fluidised bed.

Embodiment DO: A method according to embodiment DN, wherein the material being fluidised is the material to be treated.

Embodiment DP: A method according to embodiment DO, wherein the material being fluidised is a bed material not being the material to be treated.

Embodiment DQ: A method according to any of embodiments DN-DP, wherein the fluidisation is obtained by the flow of the fluid being fed to the vessel.

Embodiment DR: A method according to any of embodiments DL-DQ, comprising spraying of coating or impregnation chemical(s) into said agitated vessel in at least part time of said depressurisation step.

Embodiment DS: A method according to embodiment DR, wherein said coating or impregnation chemical(s) is/are sprayed into said agitated vessel as a slurry.

Embodiment DT: A method according to embodiment DS, wherein said coating or impregnation chemical(s) is/are substantially insoluble in the fluid contained ion the vessel.

Embodiment DU: A method according to any of embodimens AB-DT, wherein at least a first part of the fluid withdrawn from the vessel during depressurisation is fed to a buffer tank having an outlet connected to the vessel either directly or via the re-circulation loop, wherein it is condensed, preferably by direct spraying into the liquid phase of said fluid.

Embodiment DV: A method according to any of embodiments AB-DU, wherein at least a second part of fluid withdrawn from the vessel is fed to a condenser wherein it is condensed, the condensed fluid being subsequently fed into a buffer tank having an outlet connected to the vessel either directly or via the recirculation loop.

Embodiment DW: A method according to embodiment DV, wherein the temperature in the buffer tank is controlled so as to maintain substantially constant, said controlling being obtained at least partially by splitting the first and the second part of fluid being withdrawn from the vessel and fed to the buffer tank, thereby balancing the heat consumed by the evaporative cooling generated from the fluid being withdrawn from the buffer tank through the outlet thereof.

Embodiment DX: A method according to embodiment DW, wherein the controlling of the temperature in the buffer tank further comprising controlling the liquid level in the buffer tank by adding make-up fluid from a fluid make-up tank.

Embodiment DY: A method according to any of embodiments DU-DX, comprising several treatment lines operating in parallel and in different states in the cyclic method, and wherein said several treatment lines are connected to said buffer tank and have:

- common feeding system(s) for pressurisation,
- common lines for depressurization including compressors,
- common condenser(s),
- common line(s) for spraying said fluid into the liquid phase
- common make-up system(s)

Embodiment DZ: A method according to embodiment DY, wherein said several treatment lines comprises 2 to 6 lines, such as 3-4 lines.

Embodiment EA: A method according to embodiment DZ, wherein said the pressure in said buffer tank is in the range 55-70 bars, and preferably in the range 60-70 bars.

Embodiment EB: A method according to any of embodiments DZ-EA, wherein the temperature in said buffer tank is in the range 12-30 C, and preferably in the range 15-25 C.

Embodiment EC: A method according to any of embodiments DU-EB, wherein the volume of the buffer tank compared to the total system volume of all treatment lines (excluding the buffer tank) is in the range of 50-300%, such as in the range of 100-150%.

Embodiment ED: A method of producing particles, preferably comprising nanocrystallites, said method utilises a method according to any of embodiments AA-EC, wherein chemicals, such as reactants to form the particles by chemical reactions, are introduced into the fluid to participate in a particle formation process.

Embodiment EE: A method according to embodiment ED, wherein said particle formation process is selected among the following particle formation processes: RESS (rapid expansion of supercritical solutions), GAS (Gas Antisolvent), SAS (solvent Anti Solvent), SEDS (Solution Enhanced Dispersion by supercritical fluid), PCA (Precipitation with Compressed Antisolvent), PGSS (Precipitation from Gas-saturated Solutions) and variations thereof.

Embodiment EF: A method according to any of embodiments ED-EE, wherein additional nucleation sites in the vessel is provided by addition of seed particles or a filling material.

Embodiment EG: A method according to any of embodiments ED-EF, wherein the number of nucleation sites is further increased by introducing ultrasound or vibrating surface effect.

Embodiment EH: A method according to any of embodiments ED-EG, wherein the particles formed are have a crystallite size in the nanometer range.

Embodiment EI: A method according to any of embodiments ED-EH, wherein said particles comprises oxide (s) such as metal oxide(s).

Embodiment EJ: A method according to any of embodiments ED-EI, wherein said particle process is a modified sol-gel process using a metal alkoxide as precursor.

Embodiment EK: A method according to any of embodiments ED-EJ, wherein said oxides is selected among silica, alumina, zirconia, titania, ceria, yttria, zinc, iron, nickel, germania, barium, antimonia, and mixtures thereof.

Embodiment EL: A method according to embodiment EJ, wherein said oxides is a thermoelectrical material or a precursor for a thermoelectric material.

Embodiment EM: A method according to embodiment EJ, wherein said oxides comprises a semi-conducting material.

Embodiment EN: A method according to embodiment EJ, wherein said oxides comprises a piezoelectric material.

Embodiment EO: A method according to embodiment EL, wherein said thermoelectrical material comprises Bi2Te3 or Bi2Te3 doped with semimetals and/or metals.

Embodiment EP: A method according to embodiment EJ, wherein said particles comprises carbide(s), nitride(s) or boride(s).

Embodiment EQ: A method according to any of embodiments ED-EH, wherein said particles comprise(s) one or more pharmaceutical or biological material(s).

Embodiment ER: A method according to any of embodiments AA-EB, wherein the material to be treated is wood.

Embodiment ES: A method according to embodiment ER, wherein the treatment is an extraction and the components being extracted comprises terpenes and resins.

Embodiment ET: A method according to any of embodiments ER-ES, wherein the wood is impregnated with an organic fungicide or an organic insecticide.

Embodiment EU: A method according to embodiment ET, wherein the wood is impregnated with chemical(s) comprising propiconazole.

Embodiment EV: A method according to any of embodiments ET-EU, wherein the wood is impregnated with a chemical(s) comprising tebuconazole.

Embodiment EW: A method according to any of embodiments ET-EV, wherein the wood is impregnated with chemicals comprising IPBC.

Embodiment EX: A method according to any of embodiments AA-EC, wherein the material treated is cork.

Embodiment EY: A method according to any of embodiments AA-EC, wherein the material to be treated is a porous sorbent.

Embodiment EZ: A method according to embodiment EY, wherein said porous sorbent is selected among aerogels, zeolites, silicagel, activated carbons, silicas, aluminas, zirconias, titanias.

Embodiment FA: A method according to embodiment EY or EZ, wherein said porous sorbent have a pore size in the range 5-100 nm, such as in the range 5-50 nm and preferably in the range 5-20 nm.

Embodiment FB: A method according to embodiments EY-FA, wherein said porous sorbent is impregnated with a silane compound.

Embodiment FC: A method according to any of embodiments EY-FB, wherein the chemical(s) for said impregnation or coating step is selected among organosilanes, alkoxysilanes, chlorosilanes, fluorosilanes, such as octadecyl silanes, n-octadecyltriethoxysilane, n-octadecyldimethylmethoxysilane, perfluorooctyltriethoxysilane, hexamethyldisilazane, trichlorooctadecylsilane, mercaptopropylsilane, mercaptopropyltrimethoxysilane, ethylenedimaine, trimethoxysilane, trimethylchlorosilane, ODDMS, tetraethoxysilane.

Embodiment FD: A method according to any of embodiments EY-FC, wherein said porous sorbent is a functionalized porous sorbent for use for chromatographic separations.

Embodiment FE: A method according to embodiment FD, wherein said functionalized porous sorbent is used as stationary phase for liquid chromatography.

Embodiment FF: A method according to any of embodiments EY-FE, wherein said porous sorbent is used in a chromatographic column for the purification or analysis of pharmaceutical or biotechnological compounds.

Embodiment FG: A method according to embodiment FF, wherein said porous sorbent is used in a chromatographic column for the purification or analysis of insuline.

Embodiment FH: A method according to any of embodiments AA-EC, wherein the material being treated is wool, preferably the method comprises extraction of lanoline.

Embodiment FI: A method according to any of embodiments AA-EC, wherein the material to be treated is a polymer.

Embodiment FJ: A method according to any of embodiments AA-EC, wherein the material to be treated is a rubber.

Embodiment FK: A method according to any of embodiments FI-FJ, wherein the material in the vessel is a polymer or elastomer such as selected from the group consisting of polyethylene, polypropylene, polystyrene, polyesters, polyethylene terephtalate, polyvinyl chloride, polyvinyl acetates, polyoxymethylene, polyacryloamide, polycarbonate, polyamides, polyurethane, copolymers thereof, chlorinated products thereof, rubbers and chlorinated rubber, silicone rubbers, butadiene rubbers, styrene-budiene-rubbers, isoprene polymers, vulcanised fluororubbers, silicone rubbers.

Embodiment FL: A method according to embodiment FK, wherein said material is a recycledmaterial.

Embodiment FM: A method according to embodiment FL, wherein said material is vulcanised rubber.

Embodiment FN: A method according to embodiment FM, wherein said material to be treated comprises vulcanised rubber.

Embodiment FO: A method according to any of embodiments AA-FK, wherein the material to be treated is a silicone rubber.

Embodiment FP: A method according to any of embodiments FI-FO, wherein the material to be treated is a particulate material such as a granulate, a powder or a fine powder.

Embodiment FQ: A method according to any of embodiments FI-FP, wherein said impregnation chemical(s) comprises ethylene, propylene, styrene, acrylic esters, acrylic acids, urethanes, epoxides, epoxy resins.

Embodiment FR: A method according to embodiment FQ, wherein said chemical(s) comprises a radical initiator such as AIBN.

Embodiment FS: A method according to any of embodiments EY-FR, wherein the impregnation chemical is a pharmaceutical drug.

Embodiment FT: An apparatus for use in treating a material, said apparatus comprising a vessel adapted to contain material to be treated and a fluid taking part in the treatment, said apparatus further comprising

- pressure means for increasing / decreasing the pressure in the vessel so as to perform at least one pressurisation step in which the pressure in the vessel in increased and at least one depressurisation step in which the pressure in the vessel is decreased
- and a recirculating loop for recirculating at least a part of the fluid, the recirculation loop being adapted to withdrawing from the vessel at least a part of the fluid contained within the vessel and feeding it to the re-circulation loop and subsequently feeding the fluid to the vessel.

Embodiment FU: An apparatus according to embodiment FT, said apparatus further comprising

- agitating means for agitating, such as fluidise, the fluid and the material present in the vessel at least part time during treatment of the material.

Embodiment FV: An apparatus according to embodiment FU, said apparatus further comprising

- a fluid recovery device, preferably being condenser, in fluid communication with the vessel.

Embodiment FW: An apparatus according to embodiment FV, wherein said fluid recovery device comprises:

- means for withdrawing gaseous fluid from said fluid recovery device and feeding it to the vessel,
- means for withdrawing liquid fluid from said fluid recovery device and feeding it to the vessel,
- means for condensing fluid from the vessel by cooling
- means for condensing fluid by direct spraying into the liquid phase of said fluid recovery device.
- a heat exchanger immersed in said liquid phase of said fluid recovery device.

Embodiment FX: An apparatus according to embodiment FW, wherein said fluid recovery device is communicating with several vessels such as 2-6 vessels.

Embodiment FY: An apparatus comprises means according to any of embodiments FT-FX thereby being adapted to carry out the method according to any of embodiments AA-FS.

Embodiment FZ: A product obtainable from a method in accordance with embodiments AA-FS.

Embodiment GA: A treated wood product according to embodiment FZ, comprising impregnation chemical(s) such as propiconazole, tebuconazole, IPBC and mixtures thereof.

Embodiment GB: A treated wood product according to embodiment GA, wherein said impregnation chemical(s) are present in a concentration in the range 0,05-1,0 g/m3, such as in the range 0,1-0,5 g/m3 and preferably in the range 0,1-0,3 g/m3, such as in the range 0,15-0,25 g/m3.

Embodiment GC: A treated wood product according embodiment GA or GB, wherein the wood product has a preservation effect against fungis.

Embodiment GD: A treated wood product according to any of embodiments GA-GC, wherein the wood product has a preservation effect against insects such termites.

Embodiment GE: A treated cork product according to embodiment FZ, wherein the concentration of components resulting in cork taint in wine such as Tri-Chloro-Anisole (TCA) is/are reduced with more than 95 %, such as more than 97,5 %, such as more than 99 %.

Embodiment GF: A porous chromatographic material according to embodiment FZ, wherein said material functionalized by a silylation impregnation and wherein said impregnation chemical(s) is/are deposited substantially in a monolayer.

Embodiment GG: A porous chromatographic material according to embodiment FZ, comprising a surface coverage of said impregnation chemical(s) of at least 5 molecules/nm$^2$ such as at least 6 molecules/nm$^2$.

Embodiment GH: An odourless polymer product according to embodiment FZ, characterised being substantially free of adversely smelling compounds.

Embodiment GI: An polymer product according to embodiment FX, characterised in being substantially free of excess monomers and volatile organic solvents.

Embodiment GJ: A product according to embodiment GG or GH, wherein said polymer product comprises a rubber.

Embodiment GK: A product according to embodiment GJ, wherein said rubber comprises vulcanized rubber .

Embodiment GL: A rubber product according to embodiment GK, wherein said non-smelling effect is stable at least up to a temperature of 50 C, such as up 70 C, and preferably up to 90 C or more.

Embodiment GM: A rubber product according to embodiment GK, wherein said non-smelling effect is stable at least up to a temperature of 50 C, such as up 70 C, and preferably up to 90 C or more.

Embodiment GN: A rubber product according to embodiment GM, comprising antioxidants and antiozonants in an amount of at least 0,25 weight %, such as at least 0,5 wt %.

Embodiment GO: A rubber product according to any of embodiments GG-GN, wherein the residual amount of aromatic oils, organic acids and antiozonants in the product is at least 0,5 weight %, such as at least 1 weight %, and preferable at least 2 weight %.

**Claims**

1. A method of treating a material contained in a vessel, said method involves a fluid present in the vessel and comprising at least one pressurisation step in which the pressure in the vessel is increased and at least one depressurisation step in which the pressure in the vessel is decreased, the method comprising:

   - a holding step in which the pressure in the vessel is substantially constant and/or in which the pressure of the fluid in the vessel is varied according to a pre-selected schedule during a holding period of predetermined length, the fluid is at supercritical conditions during the holding period, and the fluid after the pressurisation step is in a supercritical state and said fluid is carbon dioxide,
   and
   - the holding period comprises one or more extraction steps followed by one or more impregnation steps, or
   - the last step(s) of the holding period comprises one or more extraction step(s).

2. A method of treating a material contained in a vessel, said method involves a fluid present in the vessel and comprising at least one pressurisation step in which the pressure in the vessel is increased and at least one depressurisation step in which the pressure in the vessel is decreased, said method comprising at least one step of extraction of components from the material contained in the vessel, wherein said extraction step comprises

   - controlling the thermodynamical state in the vessel so as to obtain a pre-selected state in which extraction of components occur,
   - withdrawing from said vessel at least a part of the fluid contained within the vessel during said step(s) of extraction of components from the material contained in the vessel, and feeding it to a re-circulation loop for separation of extracted components from said fluid,
   - separating at least partly said extracted components from said fluid at a pressure above the critical pressure of said fluid,- feeding said separated fluid to the vessel.

3. A method according to any of the preceding claims, wherein said fluid further comprises at least one cosolvent.

4. A method according to claim 3, wherein the cosolvent is selected from the group consisting of alcohol(s), water, methane, ethane, ethylene, propane, butane, pentane, hexane, heptane, ammonia, benzene, sulfurhexafluoride, nitrousoxide, chlorotrifluoromethane, monofluoromethane, methanol, ethanol, DMSO, isopropanol, acetone, THF, acetic acid, ethyleneglycol, polyethyleneglycol, N,N-dimethylaniline etc. and mixtures thereof.

5. A method according to any of the preceding claims, wherein the pressure in the vessel after pressurisation step is in the range 85-500 bar, preferably in the range 85-300 bar such as 100-200 bar.

6. A method according to any of the preceding claims, wherein the temperature in the vessel is maintained in the range 20-300 °C, such as a 30-150 °C, preferable as 35-100 °C, such as 40-60 C

7. A method according to any of the preceding claims, wherein the rate of (de)pressurisation is controlled in a predefined manner in specific pressure intervals during the (de)pressurisation period and the rate of pressure increase in at least part of the pressure range from 40 to 120 bars is at the most one half of the maximum rate of pressurisation outside this range, such as one third of the maximum rate of pressurisation, and preferably at the most one fifth of the maximum rate of pressurisation, and more preferably at the most one tenth of maximum rate of pressurisation outside this pressure range.

8. A method according to any of the preceding claims, wherein the temperature of the fluid fed to the vessel during all or some of the holding period varies according to a predefined schedule in order to introduce pressure variations corresponding to the temperature variations in the vessel.

9. A method according to any of the preceding claims, wherein a coating or an impregnation treatment is performed in the pressure vessel.

10. A method according to any of the preceding claims, wherein an extraction treatment is or is additionally performed in the pressure vessel.

11. A method according to any of the preceding claims, said method comprising at least one step of extraction of components from the material contained in the vessel, wherein said extraction comprising controlling the thermodynamical state in the vessel so as to obtain a pre-selected state in which extraction of components occur.

12. A method according to claim 11, wherein the temperature in the vessel during said extracting of components from the material contained in the vessel, is in the range 70-140 C.

13. A method according to claim 11 or 12, wherein the pressure in the vessel during said extraction of components from the material contained in the vessel, is in the range 100-500 bar, such as in the range 120-300 bar.

14. A method according to any of the claims 11-13, wherein the thermodynamic state in the vessel is controlled so as to obtain a selective extraction of components from the material contained in the vessel, while substantially maintaining other extractable components in the material.

15. A method according to claim 14, wherein said selective extraction is further controlled by substantially saturating the extraction fluid with components desired to be maintained in the material in the vessel.

16. A method according to claims 14-15, wherein said method comprises subsequent extraction steps, wherein the thermodynamic state in each step is controlled so as to obtain a pre-selected state in which a pre-selected extraction of components from the material in the vessel occur.

17. A method according to claim 16, wherein the thermodynamic state in the first step is controlled so as the temperature in the vessel is in the range 65-100 C such as in the range 70-90 C, and is controlled so as the pressure in the vessel is in the range 100-200 bar such as in the range 140 -170 bar.

18. A method according to any of the claims 16-17, wherein the thermodynamic state in the second extraction step is controlled so as the temperature in the vessel is in the range 80-140 C, and is controlled so as the pressure in vessel is in the range 200-300 bar.

19. A method according to any of claims 11-18, said method comprising at least one step of extraction of components from the material contained in the vessel, wherein said extraction comprising:

   - controlling the thermodynamical state in the vessel so as to obtain a pre-selected state in which extraction of components occur,
   - withdrawing from said vessel at least a part of the fluid contained within the vessel during said step(s) of extraction of components from the material contained in the vessel,and feeding it to a re-circulation loop for separation of extracted components from said fluid,
   - separating at least partly said extracted components from said fluid at a pressure above the critical pressure of said fluid

- feeding said separated fluid to the vessel.

**20.** A method according to claim 19, wherein the pressure in the vessel for said extraction of components is at least 150 bars, such as at least 200 bar, such as at least 300 bars.

**21.** A method according to claim 20, wherein the pressure for said separation of said extracted components from said fluid is at least 1/2 of the of the pressure in the vessel for said extraction of components, such as at least 2/3 of the pressure in the vessel for said extraction of components, such as at least 3/4 of the pressure in the vessel for said extraction of components.

**22.** A method according to any of the claims 19-21, wherein the thermodynamic state for separation of is controlled so as the solubility of the extracted components in said fluid is maximum 20 % of the solubility of the extracted components at the pressure in the vessel for said extraction of components, such as is maximum 10 % of the solubility of the extracted components at the pressure in the vessel for said extraction of components, and preferable maximum 5 % of the solubility of the extracted components at the pressure in the vessel for said extraction of components.

**23.** A method according to any of the preceding claims, said method comprising at least at least one impregnation or coating step for impregnating the material contained in the vessel, wherein said impregnation or coating step comprising controlling the thermodynamical state in the vessel so as to obtain a pre-selected state in which impregnation components, such as one or more reactant contained in the vessel, impregnates or coates the material contained in the vessel.

**24.** A method according to any of claims 1-23, wherein the holding period comprises one or more extraction steps, and wherein the extraction step is followed by one or more impregnation steps.

**25.** A method according to claim 24, wherein the holding period comprises one or more extraction step(s), and followed by one or more impregnation step(s), and wherein the impregnation is followed by one or more step(s) of increasing the temperature, and wherein the one or more steps of increasing the temperature is followed by one or more steps of decreasing the temperature.

**26.** A method according to claim 25, wherein the last step(s) of the holding period comprises one or more extraction step(s).

**27.** A method according to any of claims 1-26, wherein the holding period comprising one or more extraction steps, wherein the pressure in the vessel is kept constant, and wherein the extraction step is followed by one or more impregnation steps during which the pressure in the vessel is kept substantially at the same level as during the impregnation step, and wherein no substantially pressure change occur in the vessel during change over from the extraction to the impregnation step.

**28.** A method according to claim 27, wherein the method comprises a further impregnation step following the first impregnation step, and wherein the pressure during further impregnation step is higher or lower than the pressure during the first impregnation step.

**29.** A method according to any of the claims 27-28, wherein the impregnation step or the further impregnation step is followed by one or more steps of increasing the temperature, preferably while keeping the pressure constant, one or more of the one or more steps of increasing the temperature is preferably followed by one or more steps of decreasing the temperature, preferably while keeping the pressure constant.

**30.** An apparatus for use in treating a material, said apparatus comprising a vessel adapted to contain material to be treated and a fluid taking part in the treatment, said apparatus further comprising

- pressure means for increasing / decreasing the pressure in the vessel so as to perform at least one pressurisation step in which the pressure in the vessel in increased and at least one depressurisation step in which the pressure in the vessel is decreased
- and a recirculating loop for recirculating at least a part of the fluid, the recirculation loop being adapted to withdrawing from the vessel at least a part of the fluid contained within the vessel and feeding it to the recirculation loop and subsequently feeding the fluid to the vessel.

**31.** An apparatus comprises means according to claim 30, being further adapted to carry out a method according to any of claims 1-29.

**32.** A product obtainable from any of the methods in claims 1-29.

Reactor pressure

Fig. 1

0: Material handling and purging, 1: Pressurization, 2: Holding Period for Treatment, 3: Depressurization.

Fig. 2

EP 2 014 344 A2

Fig. 3

Fig. 4

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9627704 A
- EP 0083890 A
- EP 1265683 A
- US 5514220 A, Wetmore
- US 5599381 A
- US 4163580 A
- US 4059308 A
- EP 1265583 A, Horhota

**Non-patent literature cited in the description**

- **MARK MCHUGH ; VAL KRUKONIS.** *Supercritical Fluid Extraction,* 1994